# EUROPEAN PATENT APPLICATION

(11) **EP 4 472 282 A1**
(43) Date of publication of application: **04.12.2024**
(21) Application number: 23755800.2
(22) Date of filing: 15.02.2023
(51) Int. Cl.: H04W 28/24

(54) **INFORMATION DISCLOSURE METHOD AND COMMUNICATION DEVICE**

(30) Priority: 21.02.2022 CN 202210157922
(71) Applicant: VIVO MOBILE COMMUNICATION CO., LTD., Dongguan, Guangdong 523863 (CN)
(72) Inventor: KE, Xiaowan, Dongguan, Guangdong 523863 (CN)
(74) Representative: Murgitroyd & Company
(86) International application number: PCT/CN2023/076144
(87) International publication number: WO 2023/155798

(57) **Abstract**

This application discloses an information exposure method and a communication device. The information exposure method applied to a first communication device includes: performing, by the first communication device, a first operation; where the first operation includes at least one of the following: allocating an identifier of a first tunnel; allocating an address of a first endpoint of the first tunnel; allocating an identifier of a tunnel, where the identifier of the tunnel does not belong to a range of tunnel identifiers allocatable by a terminal, and/or the identifier of the tunnel belongs to a range of the identifier of the first tunnel; and sending first information, where the first information includes at least one of the following: a first message, and first request information used for establishing a tunnel or establishing the first tunnel.

## Description

### CROSS-REFERENCE TO RELATED APPLICATION

This application claims priority to Chinese Patent Application No. 202210157922.8, filed in China on February 21, 2022, which is incorporated herein by reference in its entirety.

### TECHNICAL FIELD

This application pertains to the field of wireless communications technologies, and in particular, relates to an information exposure method and a communication device.

### BACKGROUND

Media services such as extended reality (Extended Real, XR) need to provide quality of service (Quality of Service, QoS) information and network status to applications, so that the applications can determine coding and rate, so as to facilitate better network scheduling and avoid network congestion. How to expose information provided by a radio access network (Radio Access Network, RAN) quickly and efficiently to facilitate calling by an application server, such as adjusting codec, is a technical problem to be urgently resolved.

### SUMMARY

Embodiments of this application provide an information exposure method and a communication device, so as to resolve the problem of how to expose RAN-provided information.

In order to resolve the foregoing technical problem, this application is implemented as follows:

According to a first aspect, an information exposure method is provided, including:
performing, by a first communication device, a first operation; where
the first operation includes at least one of the following:
   allocating an identifier of a first tunnel;
   allocating information about a first endpoint of the first tunnel;
   allocating an identifier of a tunnel, where the identifier of the tunnel does not belong to a range of tunnel identifiers allocatable by a terminal, and/or the identifier of the tunnel belongs to a range of the identifier of the first tunnel; and
   sending first information, where the first information includes at least one of the following: a first message, and first request information used for establishing a tunnel or establishing the first tunnel;
   where
   the first message is one of the following: a first message for establishing a tunnel and/or allocating a tunnel resource, and a first message for requesting establishment of the first tunnel; and
   the first request information used for establishing a tunnel or establishing the first tunnel includes at least one of the following: a first request, a first indication, a first quality of service QoS requirement, the identifier of the first tunnel or an identifier of a tunnel requested to be established, a first data network name DNN, a first slice, core network CN side information of the first tunnel or CN side information of the tunnel requested to be established, radio access network RAN side information of the first tunnel or RAN side information of the tunnel requested to be established, and address information or index information of a first CN network element;
   where
   the first request is used for requesting establishment of the first tunnel; and the first indication is used to indicate that the tunnel requested to be established is the first tunnel;
   the first QoS requirement is one of the following: a QoS requirement for first data and a QoS requirement for the first tunnel, where the first data is data that carries RAN-provided information;
   the first DNN is one of the following: a DNN used for establishing the first tunnel and a DNN used for transmitting the first data; and
   the first slice is one of the following: a slice used for establishing the first tunnel and a slice used for transmitting the first data;
   where
   the first tunnel includes one or more of the following: a tunnel between a RAN network element and a first CN network element, a tunnel used for exposing RAN-provided information, and a tunnel not used for transmitting data between a terminal and a network.

According to a second aspect, an information exposure method is provided, including:
obtaining, by a second communication device, fourth information, where the fourth information includes at least one of the following: first information and a first QoS requirement; and
performing, by the second communication device, a second operation based on the fourth information; where
the second operation includes at least one of the following:
   determining to establish a first tunnel or determining to establish a requested tunnel;
   determining to establish a first subtunnel or determining to establish a subtunnel of a requested tunnel;
   determining a QoS context of the first tunnel or determining a QoS context of a tunnel requested to be established;
   based on a first QoS requirement, performing at least one of the following: establishing the first tunnel, mapping a first QoS parameter, allocating an identifier of the first tunnel, determining a first QoS rule, establishing the first subtunnel, and allocating an identifier of the first subtunnel;
   determining a first CN network element, where the determining a first CN network element includes at least one of the following: selecting the first CN network element based on a first DNN and/or a first slice, determining the first CN network element based on address information or index information of the first CN network element, querying the address information of the first CN network element based on the index information of the first CN network element, determining the first CN network element to be a CN network element connected to a first PDU session, and being a CN network element that sends the first information;
   sending fifth information to the first CN network element, where the fifth information includes at least one of the following: a second message, and second request information used for establishing a tunnel, establishing a subtunnel, establishing the first tunnel, and/or establishing the first subtunnel; and
   sending third information to a third CN network element, a fifth CN network element, and/or a RAN network element, where the third information includes at least one of the following: a third message, and third request information used for establishing a tunnel, establishing a subtunnel, establishing the first tunnel, and/or establishing the first subtunnel;
   where
   the second message is one of the following: a second message for establishing a tunnel and/or allocating a tunnel resource, and a second message for requesting establishment of the first tunnel and/or the first subtunnel; and
   the second request information for establishing a tunnel, establishing a subtunnel, establishing the first tunnel, and/or establishing the first subtunnel includes at least one of the following: a first request, a first indication, a first QoS requirement, an identifier of the first tunnel or an identifier of the tunnel requested to be established, the first DNN, the first slice, RAN side information of the first tunnel or RAN side information of the tunnel requested to be established, the first QoS parameter, and the first QoS rule;
   where
   the third message is one of the following: a third message for establishing a tunnel and/or allocating a tunnel resource, and a third message for requesting establishment of the first tunnel and/or the first subtunnel; and
   the third request information for establishing a tunnel, establishing a subtunnel, establishing the first tunnel, and/or establishing the first subtunnel includes at least one of the following: the first request, the first indication, the first QoS requirement, the identifier of the first tunnel or the identifier of the tunnel requested to be established, the first DNN, the first slice, CN side information of the first tunnel or CN side information of the established tunnel, exposure mode information of the RAN-provided information, the first QoS parameter, and the first QoS rule; where
   the exposure mode information of the RAN-provided information includes at least one of the following: description information of the RAN-provided information, and a exposure mode of the RAN-provided information;
   the exposure mode of the RAN-provided information is used to indicate that the RAN-provided information is exposed through the established tunnel or the first tunnel;
   the first QoS requirement includes one of the following: a QoS requirement for the first data, a QoS requirement for the first tunnel, and a QoS requirement for the first subtunnel;
   the first QoS rule includes at least one of the following: a QoS rule for the first data, a QoS rule for the first tunnel, a QoS rule for the first subtunnel, a QoS rule for a tunnel requested to be established, and a QoS rule for a subtunnel requested to be established;
   the first QoS parameter includes at least one of the following: QoS information of the first data, a QoS parameter for the first tunnel, a QoS parameter for the first subtunnel, a QoS parameter for the tunnel requested to be established, and a QoS parameter for the subtunnel requested to be established;
   the first data is data carrying the RAN-provided information; and
   the first subtunnel is a tunnel in the first tunnel.

According to a third aspect, an information exposure method is provided, including:
obtaining, by a RAN network element, sixth information, where the sixth information includes at least one of the following: a first message, first request information used for establishing a tunnel or establishing a first tunnel, a third message, third request information for establishing a tunnel, establishing a subtunnel, establishing the first tunnel, and/or establishing a first subtunnel, exposure mode information of RAN-provided information, and address information or index information of a first CN network element; and
performing, by the RAN network element, a third operation based on the sixth information; where
the third operation includes at least one of the following:
   establishing the first tunnel or establishing a requested tunnel;
   allocating RAN side information of the first tunnel;
   sending RAN side information of the first tunnel;
   performing at least one of the following for an established first tunnel or a requested tunnel established: not allocating a radio resource, and not mapping a radio tunnel;
   performing at least one of the following for the established first subtunnel or a subtunnel of the requested tunnel established: allocating a radio resource, and mapping a radio tunnel;
   sending, through the first tunnel or a tunnel requested to be established, the RAN-provided information;
   sending, through the first subtunnel or a subtunnel of the tunnel requested to be established, the RAN-provided information;
   selecting a tunnel according to a first QoS rule to send the RAN-provided information;
   guaranteeing QoS of the first data or the first tunnel based on a first QoS parameter;
   selecting a subtunnel according to the first QoS rule to send the RAN-provided information;
   guaranteeing QoS of the first subtunnel based on the first QoS parameter; and
   sending the RAN-provided information to the first CN network element;
   where
   the first request information used for establishing a tunnel or establishing the first tunnel includes at least one of the following: a first request, a first indication, a first quality of service QoS requirement, an identifier of the first tunnel or an identifier of the tunnel requested to be established, a first data network name DNN, a first slice, CN side information of the first tunnel or CN side information of the tunnel requested to be established, radio access network RAN side information of the first tunnel or RAN side information of the tunnel requested to be established, and address information or index information of the first CN network element;
   the third request information for establishing a tunnel, establishing a subtunnel, establishing the first tunnel, and/or establishing the first subtunnel includes at least one of the following: the first request, the first indication, the first QoS requirement, the identifier of the first tunnel or the identifier of the tunnel requested to be established, the first DNN, the first slice, the CN side information of the first tunnel or the CN side information of the established tunnel, exposure mode information of the RAN-provided information, the first QoS parameter, and the first QoS rule;
   the exposure mode information is used to indicate that the RAN-provided information is exposed through the established tunnel or the first tunnel;
   the exposure mode information of the RAN-provided information includes at least one of the following: description information of the RAN-provided information, and a exposure mode of the RAN-provided information;
   the exposure mode of the RAN-provided information is used to indicate that the RAN-provided information is exposed through the established tunnel or the first tunnel;
   the first QoS requirement includes one of the following: a QoS requirement for the first data, a QoS requirement for the first tunnel, and a QoS requirement for the first subtunnel;
   the first QoS rule includes at least one of the following: a QoS rule for the first data, a QoS rule for the first tunnel, a QoS rule for the first subtunnel, a QoS rule for the tunnel requested to be established, and a QoS rule for a subtunnel requested to be established;
   the first QoS parameter includes at least one of the following: QoS information of the first data, a QoS parameter for the first tunnel, a QoS parameter for the first subtunnel, a QoS parameter for the tunnel requested to be established, and a QoS parameter for the subtunnel requested to be established;
   the first data is data carrying the RAN-provided information; and
   the first subtunnel is a tunnel in the first tunnel.

According to a fourth aspect, an information exposure method is provided, including:
obtaining, by a fourth communication device, fifth information, where the fifth information includes at least one of the following: a second message, and second request information used for establishing a tunnel, establishing a subtunnel, establishing a first tunnel, and/or establishing a first subtunnel; and
performing, by the fourth communication device, a fourth operation based on the fifth information; where
the fourth operation includes at least one of the following:
   establishing a requested tunnel or establishing the first tunnel;
   obtaining, through the first tunnel or a tunnel requested to be established, RAN-provided information;
   obtaining, from a RAN network element, the RAN-provided information;
   assisting the RAN network element in exposing information provided by the RAN network element;
   allocating CN side information of the tunnel requested to be established or the first tunnel; and
   identifying, according to a first QoS rule, data received from a tunnel as the RAN-provided information; where
   the second message is one of the following: a second message for establishing a tunnel and/or allocating a tunnel resource, and a second message for requesting establishment of the first tunnel and/or the first subtunnel; and
   the second request information for establishing a tunnel, establishing a subtunnel, establishing the first tunnel, and/or establishing the first subtunnel includes at least one of the following: a first request, a first indication, a first QoS requirement, an identifier of the first tunnel or an identifier of the tunnel requested to be established, a first DNN, a first slice, RAN side information of the first tunnel or RAN side information of the tunnel requested to be established, a first QoS parameter, and the first QoS rule.

According to a fifth aspect, an information exposure method is provided, including:
obtaining, by a fifth communication device, seventh information, where the seventh information includes at least one of the following: a subscription request for RAN-provided information, a measurement requirement for the RAN-provided information, the RAN network element supporting exposure of the RAN-provided information, a first CN network element supporting to assist the RAN network element in exposure of the RAN-provided information, a first message, and first request information for establishing a tunnel or establishing a first tunnel; and
performing, by the fifth communication device, a fifth operation based on the seventh information; where
the fifth operation includes at least one of the following:
   determining a first QoS requirement; and
   sending the first QoS requirement;
   where
   the first QoS requirement includes one of the following: a QoS requirement for first data, a QoS requirement for a first tunnel, and a QoS requirement for a first subtunnel; and
   the first data is data carrying the RAN-provided information.

According to a sixth aspect, a communication device is provided, where the communication device is a first communication device, including:
a first processing module, configured to perform a first operation; where
the first operation includes at least one of the following:
   allocating an identifier of a first tunnel;
   allocating information about a first endpoint of the first tunnel;
   allocating an identifier of a tunnel, where the identifier of the tunnel does not belong to a range of tunnel identifiers allocatable by a terminal, and/or the identifier of the tunnel belongs to a range of the identifier of the first tunnel; and
   sending first information, where the first information includes at least one of the following: a first message, and first request information used for establishing a tunnel or establishing the first tunnel;
   where
   the first message is one of the following: a first message for establishing a tunnel and/or allocating a tunnel resource, and a first message for requesting establishment of the first tunnel; and
   the first request information used for establishing a tunnel or establishing the first tunnel includes at least one of the following: a first request, a first indication, a first quality of service QoS requirement, the identifier of the first tunnel or an identifier of a tunnel requested to be established, a first data network name DNN, a first slice, core network CN side information of the first tunnel or CN side information of the tunnel requested to be established, radio access network RAN side information of the first tunnel or RAN side information of the tunnel requested to be established, and address information or index information of a first CN network element;
   where
   the first request is used for requesting establishment of the first tunnel; and the first indication is used to indicate that the tunnel requested to be established is the first tunnel;
   the first QoS requirement is one of the following: a QoS requirement for first data and a QoS requirement for the first tunnel, where the first data is data that carries RAN-provided information;
   the first DNN is one of the following: a DNN used for establishing the first tunnel and a DNN used for transmitting the first data; and
   the first slice is one of the following: a slice used for establishing the first tunnel and a slice used for transmitting the first data;
   where
   the first tunnel includes one or more of the following: a tunnel between a RAN network element and a first CN network element, a tunnel used for exposing RAN-provided information, and a tunnel not used for transmitting data between a terminal and a network.

According to a seventh aspect, a communication device is provided, where the communication device is a second communication device, including:
a first obtaining module, configured to obtain fourth information, where the fourth information includes at least one of the following: first information and a first QoS requirement; and
a second processing module, configured to perform a second operation based on the fourth information; where
the second operation includes at least one of the following:
   determining to establish a first tunnel or determining to establish a requested tunnel;
   determining to establish a first subtunnel or determining to establish a subtunnel of a requested tunnel;
   determining a QoS context of the first tunnel or determining a QoS context of a tunnel requested to be established;
   based on a first QoS requirement, performing at least one of the following: establishing the first tunnel, mapping a first QoS parameter, allocating an identifier of the first tunnel, determining a first QoS rule, establishing the first subtunnel, and allocating an identifier of the first subtunnel;
   determining a first CN network element, where the determining a first CN network element includes at least one of the following: selecting the first CN network element based on a first DNN and/or a first slice, determining the first CN network element based on address information or index information of the first CN network element, querying the address information of the first CN network element based on the index information of the first CN network element, determining the first CN network element to be a CN network element connected to a first PDU session, and being a CN network element that sends the first information;
   sending fifth information to the first CN network element, where the fifth information includes at least one of the following: a second message, and second request information used for establishing a tunnel, establishing a subtunnel, establishing the first tunnel, and/or establishing the first subtunnel; and
   sending third information to a third CN network element, a fifth CN network element, and/or a RAN network element, where the third information includes at least one of the following: a third message, and third request information used for establishing a tunnel, establishing a subtunnel, establishing the first tunnel, and/or establishing the first subtunnel;
   where
   the second message is one of the following: a second message for establishing a tunnel and/or allocating a tunnel resource, and a second message for requesting establishment of the first tunnel and/or the first subtunnel; and
   the second request information for establishing a tunnel, establishing a subtunnel, establishing the first tunnel, and/or establishing the first subtunnel includes at least one of the following: a first request, a first indication, a first QoS requirement, an identifier of the first tunnel or an identifier of the tunnel requested to be established, the first DNN, the first slice, RAN side information of the first tunnel or RAN side information of the tunnel requested to be established, the first QoS parameter, and the first QoS rule;
   where
   the third message is one of the following: a third message for establishing a tunnel and/or allocating a tunnel resource, and a third message for requesting establishment of the first tunnel and/or the first subtunnel; and
   the third request information for establishing a tunnel, establishing a subtunnel, establishing the first tunnel, and/or establishing the first subtunnel includes at least one of the following: the first request, the first indication, the first QoS requirement, the identifier of the first tunnel or the identifier of the tunnel requested to be established, the first DNN, the first slice, CN side information of the first tunnel or CN side information of the established tunnel, exposure mode information of the RAN-provided information, the first QoS parameter, and the first QoS rule; where
   the exposure mode information of the RAN-provided information includes at least one of the following: description information of the RAN-provided information, and a exposure mode of the RAN-provided information;
   the exposure mode of the RAN-provided information is used to indicate that the RAN-provided information is exposed through the established tunnel or the first tunnel;
   the first QoS requirement includes one of the following: a QoS requirement for the first data, a QoS requirement for the first tunnel, and a QoS requirement for the first subtunnel;
   the first QoS rule includes at least one of the following: a QoS rule for the first data, a QoS rule for the first tunnel, a QoS rule for the first subtunnel, a QoS rule for a tunnel requested to be established, and a QoS rule for a subtunnel requested to be established;
   the first QoS parameter includes at least one of the following: QoS information of the first data, a QoS parameter for the first tunnel, a QoS parameter for the first subtunnel, a QoS parameter for the tunnel requested to be established, and a QoS parameter for the subtunnel requested to be established;
   the first data is data carrying the RAN-provided information; and
   the first subtunnel is a tunnel in the first tunnel.

According to an eighth aspect, a communication device is provided, where the communication device is a RAN network element, including:
a second obtaining module, configured to obtain sixth information, where the sixth information includes at least one of the following: a first message, first request information used for establishing a tunnel or establishing a first tunnel, a third message, third request information for establishing a tunnel, establishing a subtunnel, establishing the first tunnel, and/or establishing a first subtunnel, exposure mode information of RAN-provided information, and address information or index information of a first CN network element; and
a third processing module, configured to perform a third operation based on the sixth information; where
the third operation includes at least one of the following:
   establishing the first tunnel or establishing a requested tunnel;
   allocating RAN side information of the first tunnel;
   sending RAN side information of the first tunnel;
   performing at least one of the following for an established first tunnel or a requested tunnel established: not allocating a radio resource, and not mapping a radio tunnel;
   performing at least one of the following for the established first subtunnel or a subtunnel of the requested tunnel established: not allocating a radio resource, and not mapping a radio tunnel;
   sending, through the first tunnel or a tunnel requested to be established, the RAN-provided information;
   sending, through the first subtunnel or a subtunnel of the tunnel requested to be established, the RAN-provided information;
   selecting a tunnel according to a first QoS rule to send the RAN-provided information;
   guaranteeing QoS of the first data or the first tunnel based on a first QoS parameter;
   selecting a subtunnel according to the first QoS rule to send the RAN-provided information;
   guaranteeing QoS of the first subtunnel based on the first QoS parameter; and
   sending the RAN-provided information to the first CN network element;
   where
   the first request information used for establishing a tunnel or establishing the first tunnel includes at least one of the following: a first request, a first indication, a first quality of service QoS requirement, an identifier of the first tunnel or an identifier of the tunnel requested to be established, a first data network name DNN, a first slice, CN side information of the first tunnel or CN side information of the tunnel requested to be established, radio access network RAN side information of the first tunnel or RAN side information of the tunnel requested to be established, and address information or index information of the first CN network element;
   the third request information for establishing a tunnel, establishing a subtunnel, establishing the first tunnel, and/or establishing the first subtunnel includes at least one of the following: the first request, the first indication, the first QoS requirement, the identifier of the first tunnel or the identifier of the tunnel requested to be established, the first DNN, the first slice, the CN side information of the first tunnel or the CN side information of the established tunnel, exposure mode information of the RAN-provided information, the first QoS parameter, and the first QoS rule;
   the exposure mode information is used to indicate that the RAN-provided information is exposed through the established tunnel or the first tunnel;
   the exposure mode information of the RAN-provided information includes at least one of the following: description information of the RAN-provided information, and a exposure mode of the RAN-provided information;
   the exposure mode of the RAN-provided information is used to indicate that the RAN-provided information is exposed through the established tunnel or the first tunnel;
   the first QoS requirement includes one of the following: a QoS requirement for the first data, a QoS requirement for the first tunnel, and a QoS requirement for the first subtunnel;
   the first QoS rule includes at least one of the following: a QoS rule for the first data, a QoS rule for the first tunnel, a QoS rule for the first subtunnel, a QoS rule for the tunnel requested to be established, and a QoS rule for a subtunnel requested to be established;
   the first QoS parameter includes at least one of the following: QoS information of the first data, a QoS parameter for the first tunnel, a QoS parameter for the first subtunnel, a QoS parameter for the tunnel requested to be established, and a QoS parameter for the subtunnel requested to be established;
   the first data is data carrying the RAN-provided information; and
   the first subtunnel is a tunnel in the first tunnel.

According to a ninth aspect, a communication device is provided, where the communication device is a fourth communication device, including:
a third obtaining module, configured to obtain fifth information, where the fifth information includes at least one of the following: a second message, and second request information used for establishing a tunnel, establishing a subtunnel, establishing a first tunnel, and/or establishing a first subtunnel; and
a fifth processing module, configured to perform a fourth operation based on the fifth information; where
the fourth operation includes at least one of the following:
   establishing a requested tunnel or establishing the first tunnel;
   obtaining, through the first tunnel or a tunnel requested to be established, RAN-provided information;
   obtaining, from a RAN network element, the RAN-provided information;
   assisting the RAN network element in exposing information provided by the RAN network element;
   allocating CN side information of the tunnel requested to be established or the first tunnel; and
   identifying, according to a first QoS rule, data received from a tunnel as the RAN-provided information; where
   the second message is one of the following: a second message for establishing a tunnel and/or allocating a tunnel resource, and a second message for requesting establishment of the first tunnel and/or the first subtunnel; and
   the second request information for establishing a tunnel, establishing a subtunnel, establishing the first tunnel, and/or establishing the first subtunnel includes at least one of the following: a first request, a first indication, a first QoS requirement, an identifier of the first tunnel or an identifier of the tunnel requested to be established, a first DNN, a first slice, RAN side information of the first tunnel or RAN side information of the tunnel requested to be established, a first QoS parameter, and the first QoS rule.

According to a tenth aspect, a communication device is provided, where the communication device is a fifth communication device, including:
a fourth obtaining module, configured to obtain seventh information, where the seventh information includes at least one of the following: a subscription request for RAN-provided information, a measurement requirement for the RAN-provided information, the RAN network element supporting exposure of the RAN-provided information, a first CN network element supporting to assist the RAN network element in exposure of the RAN-provided information, a first message, and first request information for establishing a tunnel or establishing a first tunnel; and
a sixth processing module, configured to perform a fifth operation based on the seventh information; where
the fifth operation includes at least one of the following:
   determining a first QoS requirement; and
   sending the first QoS requirement;
   where
   the first QoS requirement includes one of the following: a QoS requirement for first data, a QoS requirement for a first tunnel, and a QoS requirement for a first subtunnel; and
   the first data is data carrying the RAN-provided information.

According to an eleventh aspect, a communication device is provided, including a processor and a memory, where the memory stores a program or instructions capable of running on the processor, and when the program or the instructions are executed by the processor, the steps of the method according to the first aspect, the second aspect, the third aspect, the fourth aspect, or the fifth aspect are implemented.

According to a twelfth aspect, a readable storage medium is provided, where the readable storage medium stores a program or instructions, and when the program or the instructions are executed by a processor, the steps of the method according to the first aspect, the second aspect, the third aspect, the fourth aspect, or the fifth aspect are implemented.

According to a thirteenth aspect, a chip is provided, where the chip includes a processor and a communication interface, the communication interface is coupled to the processor, and the processor is configured to run a program or instructions to implement the steps of the method according to the first aspect, the second aspect, the third aspect, the fourth aspect, or the fifth aspect.

According to a fourteenth aspect, a computer program/program product is provided, where the computer program/program product is stored in a storage medium, and the computer program/program product is executed by at least one processor to implement the steps of the method according to the first aspect, the second aspect, the third aspect, the fourth aspect, or the fifth aspect.

According to a fifteenth aspect, a communications system is provided, where the communications system includes a terminal and a network-side device, where the network-side device is configured to execute the steps of the method according to the first aspect, the second aspect, the third aspect, the fourth aspect, or the fifth aspect.

According to the embodiments of this application, in a case that the RAN does not support servitization, the information from the RAN is quickly exposed through a CN network element proxy, so as to provide guarantee for rapid adjustment of a coding rate for media services such as XR.

### BRIEF DESCRIPTION OF DRAWINGS

Other advantages and benefits will become apparent to those of ordinary skill in the art by reading detailed description of the exemplary embodiments below. The accompanying drawings are merely intended to illustrate the purposes of the preferred implementations, and should not be construed as a limitation on this exposure. Throughout the accompanying drawings, the same reference numerals represent the same components. In the accompanying drawings:
FIG. 1 is a schematic architectural diagram of a wireless communications system according to an embodiment of this application;
FIG. 2 is a schematic architectural diagram of another wireless communications system according to an embodiment of this application;
FIG. 3 is a flowchart of an information exposure method according to an embodiment of this application;
FIG. 4 is a flowchart of another information exposure method according to an embodiment of this application;
FIG. 5 is a flowchart of another information exposure method according to an embodiment of this application;
FIG. 6 is a flowchart of another information exposure method according to an embodiment of this application;
FIG. 7 is a schematic diagram of another information exposure method according to an embodiment of this application;
FIG. 8 is a schematic diagram of another information exposure method according to an embodiment of this application;
FIG. 9 is a schematic diagram of another information exposure method according to an embodiment of this application;
FIG. 10 is a schematic diagram of another information exposure method according to an embodiment of this application;
FIG. 11A and FIG. 11B are schematic diagrams of another information exposure method according to an embodiment of this application;
FIG. 12 is a schematic diagram of another information exposure method according to an embodiment of this application;
FIG. 13 is a schematic diagram of another information exposure method according to an embodiment of this application;
FIG. 14 is a structural diagram of a communication device according to this application;
FIG. 15 is a structural diagram of another communication device according to this application;
FIG. 16 is a structural diagram of another communication device according to this application;
FIG. 17 is a structural diagram of another communication device according to this application;
FIG. 18 is a structural diagram of another communication device according to this application; and
FIG. 19 is a structural diagram of another communication device according to this application.

### DESCRIPTION OF EMBODIMENTS

The following clearly and completely describes the technical solutions in the embodiments of this application with reference to the accompanying drawings in the embodiments of this application. Apparently, the described embodiments are only some rather than all of the embodiments of this application. All other embodiments obtained by a person of ordinary skill in the art based on the embodiments of this application without creative efforts shall fall within the protection scope of this application.

In the specification and claims of this application, the term "include" and any other variants thereof are intended to cover the non-exclusive inclusion, for example, a process, method, system, product, or device that includes a list of steps or units is not necessarily limited to those expressly listed steps or units, but may include other steps or units not expressly listed or inherent to such a process, method, system, product, or device. In addition, in the specification and claims, the use of "and/or" represents presence of at least one of the connected objects, for example, "A and/or B" indicates the following three cases: A alone, B alone, or both A and B.

In the embodiments of this application, the terms "an example" or "for example" are used to represent an example, an illustration, or a description. Any embodiment or design scheme described as "an example" or "for example" in the embodiments of this application should not be construed as being more preferred or advantageous than other embodiments or design schemes. To be precise, the words such as "an example" or "for example" are intended to present a related concept in a specific manner.

Techniques described in this specification are not limited to a 5th generation (5th-generation, 5G) system and a later evolved communications system, and also are not limited to a Long Term Evolution (Long Term Evolution, LTE) or LTE-Advanced (LTE-Advanced, LTE-A) system, and may also be applied to various wireless communications systems, for example, code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems.

The terms "system" and "network" are usually used interchangeably. The CDMA system can implement radio technologies such as CDMA2000 and Universal Terrestrial Radio Access (Universal Terrestrial Radio Access, UTRA). The UTRA includes wideband CDMA (Wideband Code Division Multiple Access, WCDMA) and other CDMA variants. The TDMA system can implement radio technologies such as the global system for mobile communications (Global System for Mobile Communication, GSM). The OFDMA system can implement radio technologies such as ultra mobile broadband (Ultra Mobile Broadband, UMB), evolved UTRA (Evolution-UTRA, E-UTRA), IEEE 802.11 (Wi-Fi), IEEE 802.16 (WiMAX), IEEE 802.20, and Flash-OFDM. The UTRA and E-UTRA are parts of the universal mobile telecommunications system (Universal Mobile Telecommunications System, UMTS). The LTE and more advanced LTE (such as LTE-A) are new UMTS releases that use the E-UTRA. The UTRA, E-UTRA, UMTS, LTE, LTE-A, and GSM are cited from descriptions of the documentation of the organization named "3rd Generation Partnership Project" (3rd Generation Partnership Project, 3GPP). The CDMA2000 and UMB are cited from descriptions of the documentation of the organization named "3rd Generation Partnership Project 2" (3GPP2). Techniques described in this specification may be used in the aforementioned systems and radio technologies, and can also be used in other systems and radio technologies.

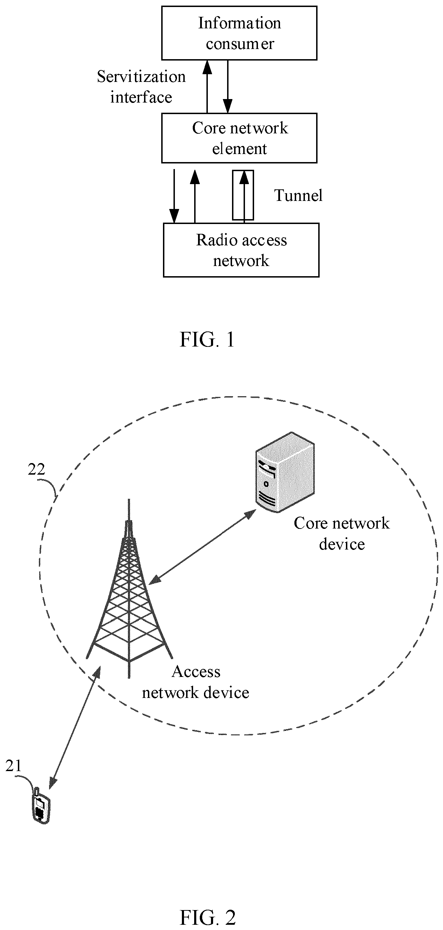

The problem in the related art is that a RAN does not support servitization, and one core network (Core Network, CN) node proxy RAN is required to provide exposed information through a servitization interface (for example, an application programming interface (Application Programming Interface, API)), so as to facilitate calling by a consumer (consumer), as shown in FIG. 1. Because the RAN provides information very frequently, the amount of data measured and exposed may be relatively large.

If a tunnel (tunnel) (or described as a tunnel) can be established between a CN node and the RAN, it facilitates the RAN to report the RAN-exposed information through the tunnel.

Problem 1: How to establish a tunnel between a CN node and a RAN node.

Problem 2: Which network element determines which information to be sent through a tunnel.

Problem 3: What exposed information is not sent through a tunnel.

Referring to FIG. 2, FIG. 2 is a block diagram of a wireless communications system to which the embodiments of this application are applicable. The wireless communications system includes a terminal 21 and a network-side device 22. The terminal 21 may be a terminal-side device, such as a mobile phone, a tablet computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), an augmented reality (augmented reality, AR)/virtual reality (virtual reality, VR) device, a robot, a wearable device (Wearable Device), vehicle user equipment (Vehicle User Equipment, VUE), pedestrian user equipment (Pedestrian User Equipment, PUE), a smart home device (a home device with wireless communication function, such as a refrigerator, a television, a washing machine, or a furniture), a game console, a personal computer (personal computer, PC), a teller machine, a self-service machine, or the like. The wearable device includes: a smart watch, a wrist band, smart earphones, smart glasses, smart jewelry (smart bracelet, smart wristband, smart ring, smart necklace, smart anklet, smart ankle bracelet, or the like), smart wristband, smart clothing, game console, and the like. It should be noted that a specific type of the terminal 21 is not limited in the embodiments of this application.

The network-side device 22 may include an a base station, access network device or a core network device, where the access network device 12 may also be referred to as a radio access network device, a radio access network (Radio Access Network, RAN), a radio access network function, or a radio access network unit. The access network device 22 may include a base station, a wireless local area network (Wireless Local Area Networks, WLAN) access point, a Wi-Fi node, or the like. The base station may be referred to as a NodeB, an evolved NodeB (eNB), an access point, a base transceiver station (Base Transceiver Station, BTS), a radio base station, a radio transceiver, a basic service set (Basic Service Set, BSS), an extended service set (Extended Service Set, ESS), a NodeB, an evolved NodeB (eNB), a home NodeB, a WLAN access point, a Wi-Fi node, a transmission and reception point (Transmitting Receiving Point, TRP), or another appropriate term in the art. Provided that a same technical effect is achieved, the base station is not limited to a specific technical term. It should be noted that in the embodiments of this application, the base station in the NR system is merely used as an example, and a specific type of the base station is not limited. The core network device may include but is not limited to at least one of the following: a core network node, a core network function, a mobility management entity (Mobility Management Entity, MME), an access mobility management function (Access and Mobility Management Function, AMF), a session management function (Session Management Function, SMF), a user plane function (User Plane Function, UPF), a policy control function (Policy Control Function, PCF), a policy and charging rules function (Policy and Charging Rules Function, PCRF), an edge application service discovery function (Edge Application Server Discovery Function, EASDF), a unified data management (Unified Data Management, UDM), a unified data repository (Unified Data Repository, UDR), a home subscriber server (Home Subscriber Server, HSS), a centralized network configuration (Centralized network configuration, CNC), a network repository function (Network Repository Function, NRF), a network exposure function (Network Exposure Function, NEF), a local NEF (Local NEF, or L-NEF), a binding support function (Binding Support Function, BSF), an application function (Application Function, AF), and the like. It should be noted that, in the embodiments of this application, a core network device in an NR system is used as an example for description, and a specific type of the core network device is not limited.

In an optional embodiment of this application, obtaining may be understood as acquiring from configuration, receiving, obtaining through receiving a request, obtaining through self-learning, obtaining through deduction based on non-received information, or obtaining through processing received information, which may be determined according to actual needs. This is not limited in the embodiments of this application. For example, when specific capability indication information sent by a device is not received, it can be deduced that the device does not support such capability.

In an optional embodiment of this application, transmitting may include broadcasting, broadcasting through a system message, or returning a response after receiving the request.

In an optional embodiment of this application, the communication device may include at least one of the following: a communication network element and a terminal.

In an optional embodiment of this application, the communication network element may include at least one of the following: a core network element and a radio access network element.

In the embodiments of this application, the core network element (CN network element) may include but is not limited to at least one of the following: a core network device, a core network node, a core network function, a core network unit, a mobility management entity (Mobility Management Entity, MME), an access mobility management function (Access Management Function, AMF), a session management function (Session Management Function, SMF), a user plane function (User Plane Function, UPF), a serving gateway (serving GW, SGW), a PDN gateway (PDN Gate Way, PDN gateway), a policy control function (Policy Control Function, PCF), a policy and charging rules function unit (Policy and Charging Rules Function, PCRF), a GPRS service support node (Serving GPRS Support Node, SGSN), a gateway GPRS support node (Gateway GPRS Support Node, GGSN), an application function (Application Function), a data collection coordination function (Data Collection Coordination Function, DCCF), a messaging framework adaptor function (Messaging Framework Adaptor Function, MFAF), and a network exposure function (Network Exposure Function, NEF).

In the embodiments of this application, the RAN network element may include but is not limited to at least one of the following: a radio access network device, a radio access network node, a radio access network function, a radio access network element, a 3GPP radio access network, a non-3GPP radio access network, a centralized unit (Centralized Unit, CU), a distributed unit (Distributed Unit, DU), a base station, an evolved NodeB (evolved Node B, eNB), a 5G NodeB (gNB), a radio network controller (Radio Network Controller, RNC), a NodeB (NodeB), a non-3GPP interworking function (Non-3GPP InterWorking Function, N3IWF), an access controller (Access Controller, AC) node, an access point (Access Point, AP) device, or a wireless local area network (Wireless Local Area Networks, WLAN) node.

A base station may be a base transceiver station (BTS, Base Transceiver Station) in GSM or CDMA, or may be a NodeB (NodeB) in WCDMA, or may be an evolved NodeB (eNB or e-NodeB, evolutional NodeB) in LTE or a 5G NodeB (gNB), which is not limited in the embodiments of this application.

In an optional embodiment of this application, the terminal may include a relay supporting terminal functions and/or a terminal supporting relay functions. The terminal may also be referred to as a terminal device or user equipment (User Equipment, UE). The terminal may be a terminal-side device such as a mobile phone, a tablet computer (Tablet Personal Computer), a laptop computer (Laptop Computer), a personal digital assistant (Personal Digital Assistant, PDA), a mobile Internet device (Mobile Internet Device, MID), a wearable device (Wearable Device), or an in-vehicle device. It should be noted that a specific type of the terminal is not limited in the embodiments of this application.

In an optional embodiment of this application, a QoS requirement in a first quality of service (Quality of Service, QoS) requirement is referred to as a QoS policy. The QoS policy may be included in a PCC rule.

In an implementation, the QoS requirement includes at least one of the following: description information of data, an identifier of a tunnel, a QoS rule, and a QoS parameter.

In an implementation, a first QoS requirement for the first data includes at least one of the following: description information of the first data, a QoS rule for the first data, and a QoS parameter of the first data.

In an implementation, a first QoS requirement for the tunnel (such as a first tunnel or a first subtunnel) includes at least one of the following: an identifier of the tunnel (such as a first QoS flow), data filter description information of the tunnel, and a QoS parameter of the tunnel.

In an optional embodiment of this application, a QoS rule (for example, a QoS rule) for a tunnel (for example, the first tunnel or the first subtunnel) includes at least one of the following: an identifier of the tunnel, and description information of a data filter (for example, a packet filter) of the tunnel. Based on the data filter, information conforming to the data filter may be sent through the first tunnel. The data filter of the tunnel includes description information of the first data.

In an optional embodiment of this application, the QoS rule for the first data includes data filter (such as packet filter) description information of at least one piece of the following first data. The data filter description information of the first tunnel includes description information of the first data.

In an optional embodiment of this application, the QoS parameter includes at least one of the following: an identifier of a tunnel, and a QoS parameter of the tunnel. The QoS parameter is, for example, a transmission rate, a delay budget, or a bit error rate.

In an optional embodiment of this application, CN side information (CN Tunnel Info) of the tunnel includes CN side transport layer information of the tunnel (UL NG-U UP TNL Information). The CN side transport layer information of the tunnel includes at least one of the following: an endpoint address of the CN side of the tunnel (such as an endpoint IP address), and an endpoint identifier of the CN side of the tunnel (such as a GTP-TEID; GTP: GPRS Tunnelling Protocol TEID: Tunnel Endpoint Identifier). Because the CN is located above the RAN, the CN side of the tunnel is usually referred to as "uplink". Therefore, the CN side information may be referred to as uplink information of the tunnel. The endpoint address of the CN side of the tunnel may be referred to as an uplink endpoint address of the tunnel. The endpoint address of the CN side of the tunnel is a destination address of uplink data in the tunnel.

In an optional embodiment of this application, RAN side information (AN Tunnel Info) of the tunnel includes:

RAN side transport layer information (DL NG-U UP TNL Information) of the tunnel. The RAN side transport layer information of the tunnel includes at least one of the following: an endpoint address of the RAN side of the tunnel (such as an endpoint IP address), and an endpoint identifier of the RAN side of the tunnel (such as a GTP-TEID; GTP: GPRS Tunnelling Protocol TEID: Tunnel Endpoint Identifier). Because the CN is located above the RAN, the RAN side of the tunnel is usually referred to as "downlink". Therefore, the RAN side information may be referred to as downlink information of the tunnel. The endpoint address of the RAN side of the tunnel may be referred to as a downlink endpoint address of the tunnel. The endpoint address of the RAN side of the tunnel is a destination address of downlink data in the tunnel.

In an optional embodiment of this application, two ends of the tunnel are a first endpoint and a second endpoint. The first endpoint may be a RAN network element or a CN network element, and the second endpoint may be a CN network element or a RAN network element. In a case that the first endpoint is a RAN network element and the second endpoint is a CN network element (such as the first CN network element), CN side information of the tunnel is allocated by the second endpoint and is used by the first endpoint to send data to the second endpoint. RAN side information of the tunnel is allocated by the first endpoint, and is used by the second endpoint to send data to the first endpoint.

In an optional embodiment of this application, the service includes data of the service, where the data of the service is also referred to as at least one of the following: service data, and a data flow of the service (service data flow).

In an optional embodiment of this application, the service data flow is an abbreviation of the data flow of the service.

In an optional embodiment of this application, index information of the first CN network element may be used to index the address of the first CN network element.

In an optional embodiment of this application, the RAN-provided information indicates at least one of the following: information that a RAN is able to provide or information that the RAN is able to expose, and information that the RAN is able to expose through a CN network element. The RAN-provided information includes at least one of the following: information of the RAN itself, information of a terminal that the RAN is able to provide, information of a service that the RAN is able to provide (usually information of a service of the terminal carried by the RAN), and information of a service.

Optionally, the RAN-provided information includes: RAN-provided information per (per) RAN granularity, RAN-provided information per UE granularity, or RAN-provided information per tunnel granularity (such as QoS flow, protocol data unit (Protocol Data Unit, PDU) session, Internet protocol security (Internet Protocol Security, IPsec), or data radio bearer (Data Radio Bearer, DRB)), and RAN-provided information per (per) service (such as traffic) granularity.

In an optional embodiment of this application, the RAN-provided information includes, but is not limited to, one or more of the following: a resource usage status of the RAN (such as a level of congestion), and QoS parameter measurement information of a QoS flow (such as a transmission rate, a delay, or an error code).

In an optional embodiment of this application, a type of the tunnel and/or a type of the subtunnel may include at least one of the following: a session (session) (such as a PDU session, or a session between a RAN and a CN), a QoS flow, an evolved packet system (Evolved Packet System, EPS) bearer, a PDP context, a DRB, a signalling radio bearer (Signalling Radio Bearer, SRB), an IPsec association, and a GPRS tunnelling protocol (GPRS Tunnelling Protocol, GTP) tunnel (tunnel). The first tunnel may be instantiated as any one of the above types of tunnels. The first subtunnel may be instantiated as any one of the above types of tunnels.

In an implementation, in a case that the first tunnel is any one type of a PDU session, a session, and a GTP tunnel, the first subtunnel includes at least one of the following: a QoS flow, a DRB, an ERAB, a RAB, and an IPsec association.

The first subtunnel is a tunnel in the first tunnel, for example, the first tunnel is a session (such as a PDU session) and the first subtunnel is a QoS flow.

In an optional embodiment of this application, an NG interface may be also referred to as an S 1 interface or an N2 interface, and the naming is not limited.

In an optional embodiment of this application, the wireless communication network may be at least one of the following: a public network, a non-public network; or a first network may be a non-public network.

In an optional embodiment of this application, the non-public network is an abbreviation of the non public network. The non-public network may be referred to as one of the following: a non-public communication network. The non-public network may include at least one of the following deployment manners: a physical non-public network, a virtual non-public network, and a non-public network implemented on a public network. In an implementation, the non-public network is a closed access group (Closed Access Group, CAG). One CAG may include a group of terminals.

In an optional embodiment of this application, the non-public network may include or be referred to as a private network. The private network may be referred to as one of the following: a private communication network, a private network, a local area network (LAN), a private virtual network (PVN), an isolated communication network, a dedicated communication network, or other names. It should be noted that the naming manner is not specifically limited in the embodiments of this application.

In an optional embodiment of this application, the public network is an abbreviation of the public network. The public network may be referred to as one of the following: a public communication network or other names. It should be noted that the naming manner is not specifically limited in the embodiments of this application.

In an optional embodiment of this application, a data packet size may be referred to as a data packet length.

In an optional embodiment of this application, a data packet may be referred to as a data frame.

The following describes the information exposure method in the embodiments of this application.

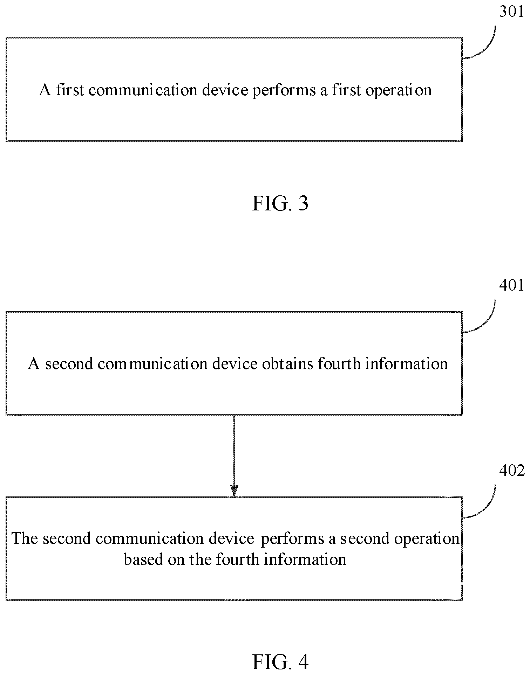

Refer to FIG. 3. An embodiment of this application provides an information exposure method, applied to a first communication device. The first communication device includes but is not limited to a RAN network element or a CN network element (such as an AMF, a PCF, an SMF, a UPF, a DCCF, or an MFAF). When being a CN network element, the second communication device may be referred to as a third CN network element, and the method includes:

Step 301: The first communication device performs a first operation.

The first operation includes at least one of the following:
(1) allocating an identifier of a first tunnel (for example, a PDU session identifier);
(2) allocating information about a first endpoint of the first tunnel (for example, CN side information or RAN side information of the first tunnel);
(3) allocating an identifier of a tunnel, where the identifier of the tunnel does not belong to a range of tunnel identifiers allocatable by a terminal, and/or the identifier of the tunnel belongs to a range of the identifier of the first tunnel; and
(4) sending first information, where the first information includes at least one of the following: a first message, and first request information used for establishing a tunnel or establishing the first tunnel;
   where
   the first message is one of the following: a first message for establishing a tunnel and/or allocating a tunnel resource, and a first message for requesting establishment of the first tunnel; and
   the first request information used for establishing a tunnel or establishing the first tunnel includes at least one of the following: a first request, a first indication, a first QoS requirement, the identifier of the first tunnel or an identifier of a tunnel requested to be established, a first data network name (Data Network Name, DNN), a first slice, CN side information of the first tunnel or CN side information of the tunnel requested to be established, RAN side information of the first tunnel or the RAN side information of the tunnel requested to be established, and address information or index information of a first CN network element;
   where
   the first request is used for requesting establishment of the first tunnel; and the first indication is used to indicate that the tunnel requested to be established is the first tunnel;
   the first QoS requirement is one of the following: a QoS requirement for first data and a QoS requirement for the first tunnel, where the first data is data that carries RAN-provided information;
   the first DNN is one of the following: a DNN used for establishing the first tunnel and a DNN used for transmitting the first data; and
   the first slice is one of the following: a slice used for establishing the first tunnel and a slice used for transmitting the first data;
   where
   the first tunnel includes one or more of the following: a tunnel between a RAN network element and a first CN network element, a tunnel used for exposing RAN-provided information, and a tunnel not used for transmitting data between a terminal and a network.

In an implementation, the first request information used for establishing a tunnel or establishing the first tunnel may be included in a first message for sending.

In an implementation, when the first communication device is a RAN network element, the first information may be sent to a second CN network element (such as a second communication device) through a third CN network element.

In an implementation, when the first communication device is a UPF, the first information may include the CN side information of the first tunnel or the CN side information of the tunnel requested to be established.

In an implementation, the first tunnel is a PDU session, and an identifier of the first tunnel is an identifier of the PDU session.

In an implementation, the information about the first endpoint of the first tunnel includes one of the following: the CN side information of the first tunnel and the RAN side information of the first tunnel.

In an implementation, when the first communication device is a RAN, the first information may include the RAN side information of the first tunnel or the RAN side information of the tunnel requested to be established.

In an implementation, the CN side information of the tunnel is used by the RAN network element of the tunnel to send data to a CN network element.

In an implementation, the RAN side information of the tunnel is used by the CN network element of the tunnel to send data to a RAN network element.

In an implementation, the address is a transport layer address (Transport Layer Address).

In an implementation, the first CN network element and the first communication device are a same device.

In another implementation, the first CN network element and the first communication device are different devices.

In an implementation, when the first CN network element and the first communication device are a same device, the first communication device allocates an uplink address of the first tunnel. The first information includes an uplink address of the first tunnel.

In an implementation, an identifier of the first tunnel does not belong to the range of tunnel identifiers allocatable by the terminal. The identifier of the first tunnel is, for example, an identifier of a PDU session. A range of PDU sessions allocatable by the terminal is any integer from 1 to 8. For example, the identifier of the first tunnel may be 9.

In an implementation of this application, the first tunnel further includes a tunnel in a first PDU session, where
the first PDU session is a PDU session established by a terminal; and information that a RAN is able to provide includes at least one of the following: information that is related to the first PDU session and that the RAN is able to provide, information that is related to a QoS flow in the first PDU session and that the RAN is able to provide, and information that is related to a service carried by the first PDU session and that the RAN is able to provide.

In an implementation, the information that is related to a service carried by the first PDU session and that the RAN is able to provide includes: QoS information of the service.

In an implementation, the information that is related to the first PDU session and that the RAN is able to provide includes: QoS information of the first session.

In an implementation, the information that is related to a QoS flow in the first PDU session and that the RAN is able to provide includes: QoS information of the QoS flow. Optionally, the QoS information includes one of the following: uplink and/or downlink transmission rate, uplink and/or downlink transmission delay overhead, uplink and/or downlink code error rate, or the like.

In an implementation, when the first tunnel is a tunnel in the first PDU session, the first CN network element is a CN network element (such as an SMF or a UPF) connected to the first PDU session.

In an implementation of this application, the performing, by a first communication device, a first operation includes:
performing, by the first communication device, the first operation in a case that a first condition is met; where
the first condition includes one or more of the following:
   (1) the first communication device has received a subscription request for the RAN-provided information;
   (2) the first communication device has received a measurement requirement for the RAN-provided information;
   (3) the RAN network element supports exposure of the RAN-provided information;
   (4) the first communication device supports requesting to establish the first tunnel; and
   (5) the first communication device obtains the address information or index information of the first CN network element;
   where
the first CN network element supports assisting the RAN network element in exposing the RAN-provided information.

In an implementation of this application, the performing, by a first communication device, a first operation includes:
obtaining, by the first communication device, second information; and
performing, by the first communication device, the first operation based on the obtained second information;
where
the second information includes one or more of the following:
   (1) a subscription request for the RAN-provided information;
   (2) a measurement requirement for the RAN-provided information;
   (3) the RAN network element supports exposure of the RAN-provided information;
   (4) the first communication device supports requesting to establish the first tunnel; and
   (5) the address information or index information of the first CN network element;
   where
   the first CN network element supports assisting the RAN network element in exposing the RAN-provided information.

In an implementation of this application, the sending, by the first communication device, first information includes:
sending, by the first communication device, the first information to at least one of a second CN network element, a second communication device, and a RAN network element.

In an implementation of this application, the method further includes:
sending, by the first communication device, third information to the RAN network element; where
the third information includes at least one of the following: a third message, and third request information for establishing a tunnel, establishing a subtunnel, establishing the first tunnel, and/or establishing a first subtunnel;
   where
the third message is one of the following: a third message for establishing a tunnel and/or allocating a tunnel resource, and a third message for requesting establishment of the first tunnel; and
the third request information for establishing a tunnel, establishing a subtunnel, establishing the first tunnel, and/or establishing a first subtunnel includes at least one of the following: a first request, a first indication, a first QoS requirement, an identifier of the first tunnel or an identifier of the tunnel requested to be established, a first DNN, a first slice, CN side information of the first tunnel or CN side information of the established tunnel, exposure mode information of the RAN-provided information, a first QoS parameter, and a first QoS rule; where
the exposure mode information of the RAN-provided information includes at least one of the following: description information of the RAN-provided information, and a exposure mode of the RAN-provided information;
the exposure mode of the RAN-provided information is used to indicate that the RAN-provided information is exposed through the established tunnel or the first tunnel;
the first QoS requirement includes one of the following: a QoS requirement for the first data, a QoS requirement for the first tunnel, and a QoS requirement for the first subtunnel;
the first QoS rule includes at least one of the following: a QoS rule for the first data, a QoS rule for the first tunnel, a QoS rule for the first subtunnel, a QoS rule for a tunnel requested to be established, and a QoS rule for a subtunnel requested to be established;
the first QoS parameter includes at least one of the following: QoS information of the first data, a QoS parameter for the first tunnel, a QoS parameter for the first subtunnel, a QoS parameter for the tunnel requested to be established, and a QoS parameter for the subtunnel requested to be established;
the first data is data carrying the RAN-provided information; and
the first subtunnel is a tunnel in the first tunnel.

In an implementation of this application, a granularity of the RAN-provided information includes one or more of the following:
(1) per RAN granularity;
(2) per terminal granularity;
(3) per terminal service granularity;
(4) per terminal tunnel granularity;
(5) per PDU session of terminal granularity; and
(6) per QoS flow of terminal granularity.

In an implementation, the first communication device receives the subscription request and measurement requirement from a CN network element (such as an AF or a NEF).

In an implementation, the first communication device obtains the address information or index information of the first CN network element from the first CN network element.

In an implementation, the first communication device obtains, from the first CN network element or another CN network element, that the first CN network element supports assisting the RAN network element in exposing the RAN-provided information.

In an implementation, the first communication device receives the second information from a CN network element (such as an AF or a NEF).

According to this embodiment of this application, in a case that the RAN does not support servitization, the information from the RAN is quickly exposed through a CN network element proxy, so as to provide guarantee for rapid adjustment of a coding rate for media services such as XR.

Referring to FIG. 4, an embodiment of this application provides an information exposure method, applied to a second communication device. The second communication device includes, but is not limited to, a CN network element (such as an SMF and a PCF). When being a CN network element, the second communication device may be referred to as a second CN network element, and the method includes:

Step 401: The second communication device obtains fourth information, where the fourth information includes at least one of the following: first information and a first QoS requirement; and the first information includes at least one of the following: a first message, and first request information used for establishing a tunnel or establishing a first tunnel.

Step 402: The second communication device performs a second operation based on the fourth information.

The second operation includes at least one of the following:
(1) determining to establish a first tunnel or determining to establish a requested tunnel;
(2) determining to establish a first subtunnel or determining to establish a subtunnel of a requested tunnel;
(3) determining a QoS context of the first tunnel or determining a QoS context of a tunnel requested to be established;
(4) based on a first QoS requirement, performing at least one of the following: establishing the first tunnel, mapping a first QoS parameter, allocating an identifier of the first tunnel, determining a first QoS rule, establishing the first subtunnel, and allocating an identifier of the first subtunnel;
(5) determining a first CN network element, where the determining a first CN network element includes at least one of the following: selecting the first CN network element based on a first DNN and/or a first slice, determining the first CN network element based on address information or index information of the first CN network element, querying the address information of the first CN network element based on the index information of the first CN network element, determining the first CN network element to be a CN network element connected to a first PDU session, and being a CN network element that sends the first information;
(6) sending fifth information to the first CN network element, where the fifth information includes at least one of the following: a second message, and second request information used for establishing a tunnel, establishing a subtunnel, establishing the first tunnel, and/or establishing the first subtunnel; and
(7) sending third information to a third CN network element, a fifth CN network element, and/or a RAN network element, where the third information includes at least one of the following: a third message, and third request information used for establishing a tunnel, establishing a subtunnel, establishing the first tunnel, and/or establishing the first subtunnel;
where
the second message is one of the following: a second message for establishing a tunnel and/or allocating a tunnel resource, and a second message for requesting establishment of the first tunnel and/or the first subtunnel; and
the second request information for establishing a tunnel, establishing a subtunnel, establishing the first tunnel, and/or establishing the first subtunnel includes at least one of the following: a first request, a first indication, a first QoS requirement, an identifier of the first tunnel or an identifier of the tunnel requested to be established, the first DNN, the first slice, RAN side information of the first tunnel or RAN side information of the tunnel requested to be established, the first QoS parameter, and the first QoS rule;
where
the third message is one of the following: a third message for establishing a tunnel and/or allocating a tunnel resource, and a third message for requesting establishment of the first tunnel and/or the first subtunnel; and
the third request information for establishing a tunnel, establishing a subtunnel, establishing the first tunnel, and/or establishing the first subtunnel includes at least one of the following: the first request, the first indication, the first QoS requirement, the identifier of the first tunnel or the identifier of the tunnel requested to be established, the first DNN, the first slice, CN side information of the first tunnel or CN side information of the established tunnel, exposure mode information of the RAN-provided information, the first QoS parameter, and the first QoS rule; where
the exposure mode information of the RAN-provided information includes at least one of the following: description information of the RAN-provided information, and a exposure mode of the RAN-provided information;
the exposure mode of the RAN-provided information is used to indicate that the RAN-provided information is exposed through the established tunnel or the first tunnel;
the first QoS requirement includes one of the following: a QoS requirement for the first data, a QoS requirement for the first tunnel, and a QoS requirement for the first subtunnel;
the first QoS rule includes at least one of the following: a QoS rule for the first data, a QoS rule for the first tunnel, a QoS rule for the first subtunnel, a QoS rule for a tunnel requested to be established, and a QoS rule for a subtunnel requested to be established;
the first QoS parameter includes at least one of the following: QoS information of the first data, a QoS parameter for the first tunnel, a QoS parameter for the first subtunnel, a QoS parameter for the tunnel requested to be established, and a QoS parameter for the subtunnel requested to be established;
the first data is data carrying the RAN-provided information; and
the first subtunnel is a tunnel in the first tunnel.

In an implementation, the fifth CN network element includes an AMF, or a CN network element (such as an AMF) that has an NG interface with the RAN network element.

In an implementation, the fifth CN network element and the third CN network element are a same CN network element.

In an implementation, the first request information for establishing a tunnel, or the first request information for establishing the first tunnel is included in a second message, for sending.

In an implementation, the third request information for establishing a tunnel, or the third request information for establishing the first tunnel is included in a third message, or is included in a response message for the first request message, for sending.

In an implementation of this application, the obtaining, by a second communication device, fourth information includes:
receiving, by the second communication device, the fourth information from at least one of the third CN network element, a first communication device, a fifth communication device, a fourth CN network element, and a CN network element.

In an implementation, the third CN network element includes at least one of the following: a DCCF, an AMF, a UPF, a PCF, or the like.

In an implementation, the fourth CN network element includes at least one of the following: an AMF, an SMF, a UPF, a DCCF, an MFAF, a PCF, or the like.

In an implementation of this application, a granularity of the RAN-provided information includes one or more of the following:
(1) per RAN granularity;
(2) per terminal granularity;
(3) per terminal service granularity;
(4) per terminal tunnel granularity;
(5) per PDU session of terminal granularity; and
(6) per QoS flow of terminal granularity.

According to this embodiment of this application, in a case that the RAN does not support servitization, the information from the RAN is quickly exposed through a CN network element proxy, so as to provide guarantee for rapid adjustment of a coding rate for media services such as XR.

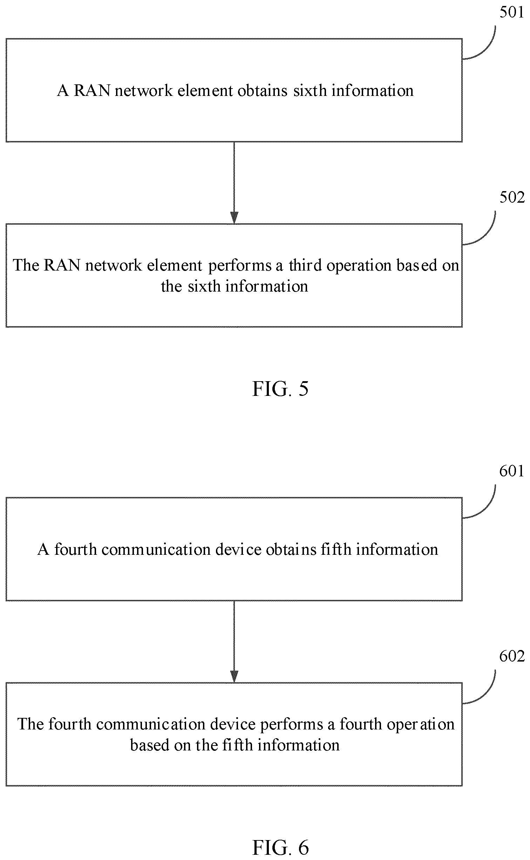

Referring to FIG. 5, an embodiment of this application provides an information exposure method, applied to a RAN network element. The RAN network element includes but is not limited to a RAN side device and the like, and the method includes:

Step 501: The RAN network element obtains sixth information, where the sixth information includes at least one of the following: a first message, first request information used for establishing a tunnel or establishing a first tunnel, a third message, third request information for establishing a tunnel, establishing a subtunnel, establishing the first tunnel, and/or establishing a first subtunnel, exposure mode information of RAN-provided information, and address information or index information of a first CN network element.

Step 502: The RAN network element performs a third operation based on the sixth information.

The third operation includes at least one of the following:
(1) establishing the first tunnel or establishing a requested tunnel;
(2) allocating RAN side information of the first tunnel;
(3) sending RAN side information of the first tunnel;
(4) performing at least one of the following for an established first tunnel or a requested tunnel established: not allocating a radio resource, and not mapping a radio tunnel;
(5) performing at least one of the following for the established first subtunnel or a subtunnel of the requested tunnel established: not allocating a radio resource, and not mapping a radio tunnel;
(6) sending, through the first tunnel or a tunnel requested to be established, the RAN-provided information;
(7) sending, through the first subtunnel or a subtunnel of the tunnel requested to be established, the RAN-provided information;
(8) selecting a tunnel according to a first QoS rule to send the RAN-provided information;
(9) guaranteeing QoS of the first data or the first tunnel based on a first QoS parameter;
(10) selecting a subtunnel according to the first QoS rule to send the RAN-provided information;
(11) guaranteeing QoS of the first subtunnel based on the first QoS parameter; and
(12) sending the RAN-provided information to the first CN network element;
where
the first request information used for establishing a tunnel or establishing the first tunnel includes at least one of the following: a first request, a first indication, a first quality of service QoS requirement, an identifier of the first tunnel or an identifier of the tunnel requested to be established, a first data network name DNN, a first slice, CN side information of the first tunnel or CN side information of the tunnel requested to be established, radio access network RAN side information of the first tunnel or RAN side information of the tunnel requested to be established, and address information or index information of the first CN network element;
the third request information for establishing a tunnel, establishing a subtunnel, establishing the first tunnel, and/or establishing the first subtunnel includes at least one of the following: the first request, the first indication, the first QoS requirement, the identifier of the first tunnel or the identifier of the tunnel requested to be established, the first DNN, the first slice, the CN side information of the first tunnel or the CN side information of the established tunnel, exposure mode information of the RAN-provided information, the first QoS parameter, and the first QoS rule;
the exposure mode information is used to indicate that the RAN-provided information is exposed through the established tunnel or the first tunnel;
the exposure mode information of the RAN-provided information includes at least one of the following: description information of the RAN-provided information, and a exposure mode of the RAN-provided information;
the exposure mode of the RAN-provided information is used to indicate that the RAN-provided information is exposed through the established tunnel or the first tunnel;
the first QoS requirement includes one of the following: a QoS requirement for the first data, a QoS requirement for the first tunnel, and a QoS requirement for the first subtunnel;
the first QoS rule includes at least one of the following: a QoS rule for the first data, a QoS rule for the first tunnel, a QoS rule for the first subtunnel, a QoS rule for the tunnel requested to be established, and a QoS rule for a subtunnel requested to be established;
the first QoS parameter includes at least one of the following: QoS information of the first data, a QoS parameter for the first tunnel, a QoS parameter for the first subtunnel, a QoS parameter for the tunnel requested to be established, and a QoS parameter for the subtunnel requested to be established;
the first data is data carrying the RAN-provided information; and
the first subtunnel is a tunnel in the first tunnel.

In an implementation, the radio tunnel includes a DRB. It is not difficult to understand that "the performing at least one of the following for an established first tunnel or a requested tunnel established: not allocating a radio resource, and not mapping a radio tunnel" is because the established tunnel or the first tunnel is used for sending the RAN-provided information to the first CN network element, without an air interface transmission requirement.

In an implementation of this application, in a case that the sixth information includes the first request information used for establishing a tunnel or establishing the first tunnel,
the obtaining, by a RAN network element, sixth information includes:
receiving, by the RAN network element, the first request information used for establishing a tunnel or establishing the first tunnel from at least one of a first communication device, a third CN network element, the first CN network element, and a CN network element.

In another implementation of this application, in a case that the sixth information includes the third request information for establishing a tunnel, establishing a subtunnel, establishing the first tunnel, and/or establishing the first subtunnel,
the obtaining, by a RAN network element, sixth information includes:
receiving, by the RAN network element, the third request information for establishing a tunnel, establishing a subtunnel, establishing the first tunnel, and/or establishing the first subtunnel from at least one of a second communication device, a second CN network element, the first CN network element, the third CN network element, a fifth CN network element, and the CN network element.

In an implementation, the fifth CN network element includes an AMF, or a CN network element (such as an AMF) that has an NG interface with the RAN network element.

In an implementation of this application, before the step of obtaining the sixth information by the RAN network element, the method further includes:
performing, by the RAN network element, a first operation, where the first operation includes at least one of the following:
(1) allocating an identifier of the first tunnel;
(2) allocating information about a first endpoint of the first tunnel;
(3) allocating an identifier of a tunnel, where the identifier of the tunnel does not belong to a range of tunnel identifiers allocatable by a terminal, and/or the identifier of the tunnel belongs to a range of the identifier of the first tunnel; and
(4) sending first information, where the first information includes at least one of the following: the first message, and the first request information used for establishing a tunnel or establishing the first tunnel.

It should be noted that for how the RAN network element performs the first operation in this embodiment, reference may be made to the description of performing the first operation by the first communication device that is a RAN network element in the embodiment shown in FIG. 3, and details not be repeated herein.

According to this embodiment of this application, in a case that the RAN does not support servitization, the information from the RAN is quickly exposed through a CN network element proxy, so as to provide guarantee for rapid adjustment of a coding rate for media services such as XR.

Referring to FIG. 6, an embodiment of this application provides an information exposure method, applied to a fourth communication device. The fourth communication device includes but is not limited to a CN network element (such as an AMF, a PCF, an SMF, a UPF, a DCCF, or an MFAF). In a case that the fourth communication device is a CN network element, it may be referred to as a first CN network element. In an implementation, the first CN network element and a third CN network element are a same CN network element. In another implementation, the fourth communication device and a first communication device are a same communication device. The method includes:

Step 601: The fourth communication device obtains fifth information, where the fifth information includes at least one of the following: a second message, and second request information used for establishing a tunnel, establishing a subtunnel, establishing a first tunnel, and/or establishing a first subtunnel.

Step 602: The fourth communication device performs a fourth operation based on the fifth information.

The fourth operation includes at least one of the following:
(1) establishing a requested tunnel or establishing the first tunnel;
(2) obtaining, through the first tunnel or a tunnel requested to be established, RAN-provided information;
(3) obtaining, from a RAN network element, the RAN-provided information;
(4) assisting the RAN network element in exposing information provided by the RAN network element;
(5) allocating CN side information of the tunnel requested to be established or the first tunnel; and
(6) identifying, according to a first QoS rule, data received from a tunnel as the RAN-provided information; where

the second message is one of the following: a second message for establishing a tunnel and/or allocating a tunnel resource, and a second message for requesting establishment of the first tunnel and/or the first subtunnel; and
the second request information for establishing a tunnel, establishing a subtunnel, establishing the first tunnel, and/or establishing the first subtunnel includes at least one of the following: a first request, a first indication, a first QoS requirement, an identifier of the first tunnel or an identifier of the tunnel requested to be established, a first DNN, a first slice, RAN side information of the first tunnel or RAN side information of the tunnel requested to be established, a first QoS parameter, and the first QoS rule.

In an implementation, the fourth communication device obtains the fifth information from a second communication device or a CN network element (such as a second CN network element or a fifth CN network element).

According to this embodiment of this application, in a case that the RAN does not support servitization, the information from the RAN is quickly exposed through a CN network element proxy, so as to provide guarantee for rapid adjustment of a coding rate for media services such as XR.

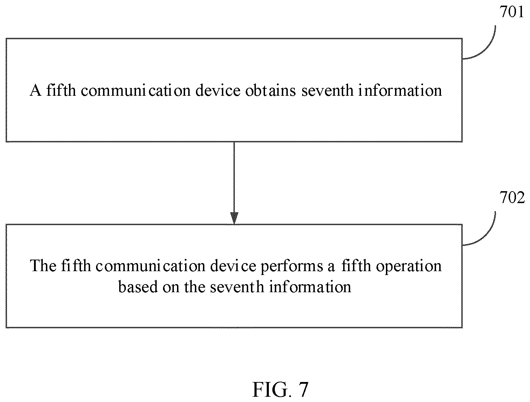

Referring to FIG. 7, an embodiment of this application provides an information exposure method, applied to a fifth communication device. The fifth communication device may be a CN network element (such as a PCF). When being a CN network element, the fifth communication device may be referred to as a fourth CN network element. In an implementation, the fourth CN network element and a third CN network element are a same CN network element. In another implementation, the fifth communication device and the first communication device are a same communication device. The method includes the following steps.

Step 701: The fifth communication device obtains seventh information, where the seventh information includes at least one of the following: a subscription request for RAN-provided information, a measurement requirement for the RAN-provided information, the RAN network element supporting exposure of the RAN-provided information, a first CN network element supporting to assist the RAN network element in exposure of the RAN-provided information, a first message, and first request information for establishing a tunnel or establishing a first tunnel.

Step 702: The fifth communication device performs a fifth operation based on the seventh information.

The fifth operation includes at least one of the following:
(1) determining a first QoS requirement; and
(2) sending the first QoS requirement;
where
the first QoS requirement includes one of the following: a QoS requirement for first data, a QoS requirement for a first tunnel, and a QoS requirement for a first subtunnel; and
the first data is data carrying the RAN-provided information.

In an implementation, the fourth CN network element and the third CN network element are a same CN network element.

In an implementation, the fifth communication device and a first communication device are a same communication device. In an implementation, the fifth communication device obtains, from a CN network element (such as an AF or a NEF), a subscription request for the RAN-provided information and/or a measurement requirement for the RAN-provided information.

In an implementation, the fifth communication device obtains, from a RAN network element, a CN network element (such as the third CN network element), or the first communication device, the first message and/or the first request information for establishing a tunnel or establishing the first tunnel.

In an implementation, the fifth communication device obtains, from the RAN network element or the CN network element, that the RAN network element supports exposure of the RAN-provided information.

In an implementation, the fifth communication device obtains, from the first CN network element or another CN network element, that the first CN network element supports assisting the RAN network element in exposing the RAN-provided information.

According to this embodiment of this application, in a case that the RAN does not support servitization, the information from the RAN is quickly exposed through a CN network element proxy, so as to provide guarantee for rapid adjustment of a coding rate for media services such as XR.

The following describes the information exposure method in the embodiments of this application with reference to specific application scenarios.

Application scenario 1 in the embodiments of this application:

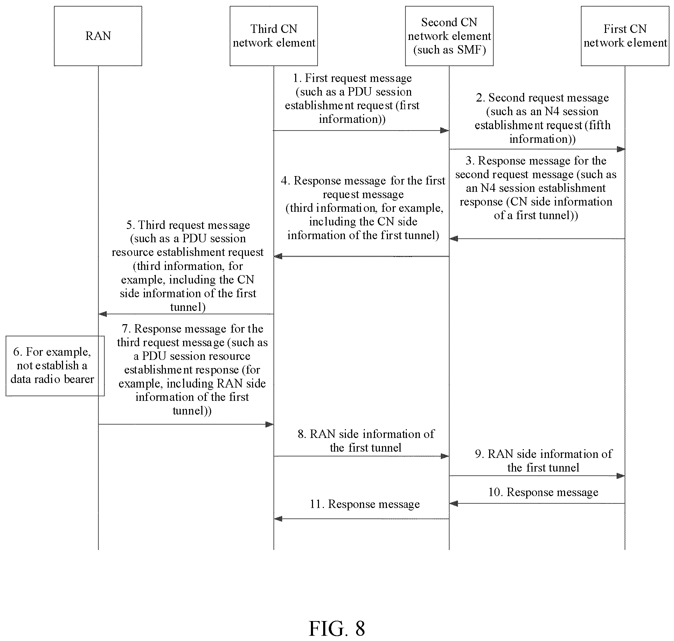

Referring to FIG. 8, the specific steps are as follows:
Step 1: A third CN network element sends a first request message to a second CN network element.

For example, the third CN network element sends a PDU session establishment request or a tunnel establishment request to the second CN network element (such as an SMF) based on a received subscription request for RAN information, or based on the third CN network element capable of determining that the RAN supports information exposure, or based on a capability of the third CN network element itself.

Optionally, the first request message carries first information.

Optionally, the second CN network element may allocate one first tunnel identifier (or described as a PDU session identifier) based on the received first request message. The first tunnel identifier is different from a tunnel identifier of the terminal, for example, the tunnel identifier of the terminal is 1 to 8, and the first tunnel identifier allocated by the second CN network element based on the received first request message may be "9".

Optionally, the first request message may carry information about the second CN network element, such as data network name (Data Network Name, DNN) information of the second CN network element, slice information of the second CN network element, or address information of the second CN network element.

Step 2: The second CN network element sends a second request message to the first CN network element.

Optionally, the second request message may be an N4 session establishment request, and the second request message carries fifth information.

Step 3: The first CN network element sends a response message for the second request message.

Optionally, the response message in this step may be an N4 session establishment response, where the response message carries CN side information of the first tunnel allocated by the first CN network element.

Step 4: The second CN network element sends a response message for the first request message.

Optionally, the response message in this step carries third information, and the third information includes CN side information of the first tunnel.

Step 5: The third CN network element sends a third request message to the RAN.

Optionally, the third request message may be a PDU session establishment request, and the third request message may carry third information, for example, including the CN side information of the first tunnel.

Step 6: Optionally, the RAN does not establish a data radio bearer (Data Radio Bearer, DRB).

Step 7: The RAN sends a response message for the third request message to the third CN network element.

Optionally, the response message in this step may be a PDU session resource establishment response, for example, including the RAN side information of the first tunnel allocated by the RAN.

Step 8: The third CN network element sends the RAN side information of the first tunnel to the second CN network element.

Step 9: The second CN network element sends the RAN side information of the first tunnel to the first CN network element.

Step 10: The first CN network element sends a response message to the second CN network element, where the response message indicates that the first tunnel is successfully established.

Step 11: The second CN network element sends a response message to the first CN network element, where the response message indicates that the first tunnel is successfully established.

This embodiment is more applicable to exposure of RAN information per RAN granularity.

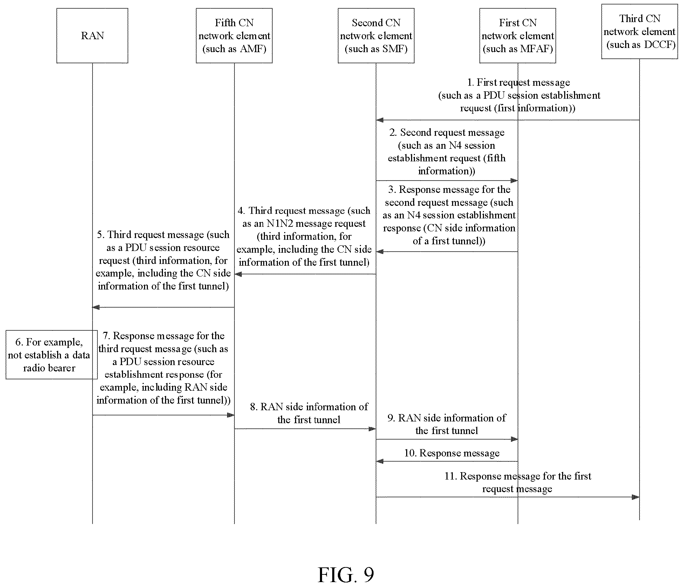

Application scenario 2 in the embodiments of this application:
Referring to FIG. 9, the specific steps are as follows:
Step 1: A third CN network element sends a first request message to a second CN network element.

For example, the third CN network element sends a first request message to the second CN network element based on a received subscription request for RAN information, or based on the third CN network element capable of determining that the RAN supports information exposure, or based on a capability of the third CN network element.

Optionally, the first request message may be a PDU session establishment request, where the first request message may carry first information.

Optionally, the second CN network element may allocate a first tunnel identifier (or described as a PDU session identifier) based on the received tunnel establishment request. The first tunnel identifier is different from a tunnel identifier of the terminal, for example, the tunnel identifier of the terminal is 1 to 8, and the first tunnel identifier allocated by the SMF based on the received tunnel establishment request may be "9".

Optionally, the first request message may carry information of the second CN network element, such as DNN information of the second CN network element, slice information of the second CN network element, or address information of the second CN network element.

Step 2: The second CN network element sends a second request message to the first CN network element.

Optionally, the second request message may be an N4 session establishment request, and the second request message may carry fifth information.

Step 3: The first CN network element sends a response message for the second request message to the second CN network element.

Optionally, the response message in this step may be an N4 session establishment response, where the response message may carry CN side information of the first tunnel allocated by the first CN network element.

Step 4: The second CN network element sends a third request message to the fifth CN network element.

Optionally, the third request message may be an N1/N2 message request, and the third request message may carry third information, such as CN side information of the first tunnel allocated by the first CN network element.

Step 5: The fifth CN network element sends a third request message to the RAN.

Optionally, the third request message may be a PDU session resource request, and the third request message may carry third information, for example, including the CN side information of the first tunnel.

Step 6: Optionally, the RAN does not establish a DRB.

Step 7: The RAN sends a response message for the third request message to the fifth CN network element.

Optionally, the response message in this step carries RAN side information of the first tunnel allocated by the RAN.

Step 8: The fifth CN network element sends the RAN side information of the first tunnel to the second CN network element.

Step 9: The second CN network element sends the second CN network element to the first CN network element.

Step 10: The first CN network element sends a response message to the second CN network element, indicating that the tunnel is successfully established.

Step 11: The second CN network element sends a response message to the third CN network element, indicating that the tunnel is successfully established.

This embodiment is more applicable to exposure of RAN information per RAN granularity.

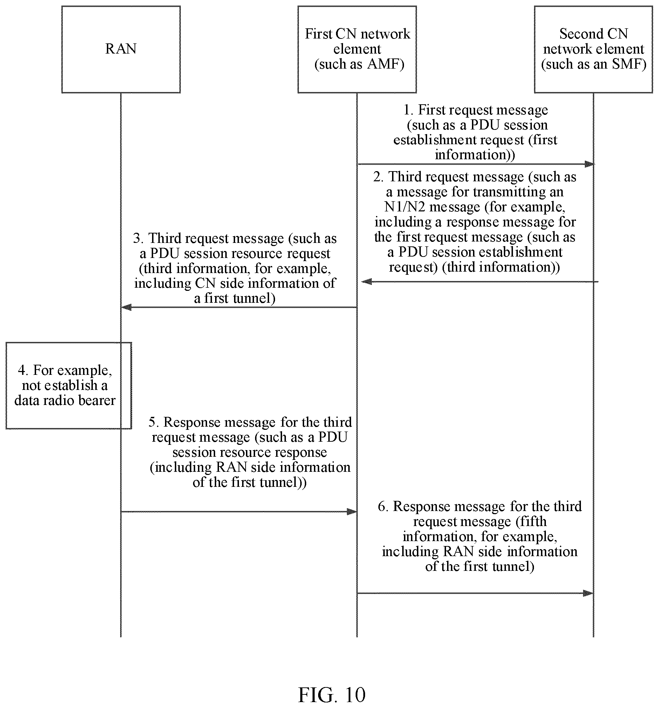

Application scenario 3 in the embodiments of this application:
Referring to FIG. 10, the specific steps are as follows:
Step 1: A first CN network element (such as an AMF) sends a first request message to a second CN network element (such as an SMF).

For example, the first CN network element sends a first request message to the second CN network element based on a received subscription request for RAN information, or based on the first CN network element capable of determining that the RAN supports information exposure, or based on a capability of the first CN network element.

Optionally, the first request message may be a PDU session establishment request, where the first request message carries first information.

Optionally, the second CN network element may allocate one tunnel identifier (or described as a PDU session identifier) based on the received first request message. The tunnel identifier is different from a tunnel identifier of the terminal, for example, the tunnel identifier of the terminal is 1 to 8, and the tunnel identifier allocated by the second CN network element based on the received first request message may be "9".

Step 2: The second CN network element sends a third request message to the first CN network element.

Optionally, the third request message in this step may be a message for transmitting an N1/N2 message, including, for example, a response message for the first request message, and the third request message may carry third information.

Step 3: The first CN network element sends a third request message to the RAN.

Optionally, the third request message may be a PDU session resource request, and the third request message may carry third information, such as CN side information of the first tunnel allocated by the second CN network element.

Step 4: Optionally, the RAN does not establish a DRB.

Step 5: The RAN sends a response message for the third request message.

Optionally, the response message in this step may be a PDU session resource establishment response, where the response message includes RAN side information of the first tunnel allocated by the RAN.

Step 6: The first CN network element sends a response message for the third request message to the second CN network element.

Optionally, the response message in this step may carry fifth information, such as RAN side information including the first tunnel. This embodiment is applicable to exposure of RAN information per (per) RAN granularity and exposure of RAN information per UE.

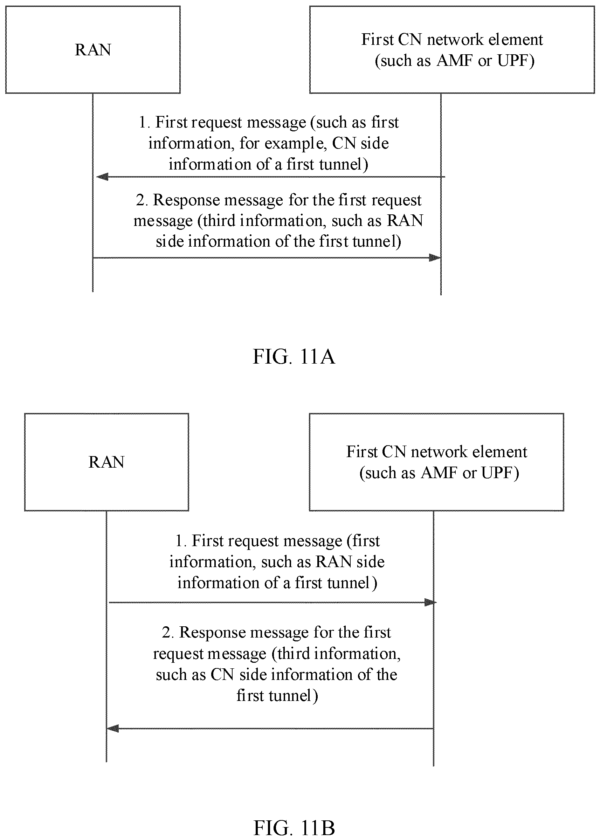

Application scenario 4 in the embodiments of this application:
Referring to FIG. 11A, the specific steps are as follows:
Step 1: The first CN network element (such as an AMF or a UPF) sends a first request message to the RAN.

Optionally, the first request message carries first information, such as CN side information of a first tunnel.

Step 2: The RAN sends a response message for the first request message to the first CN network element.

Optionally, the response message carries third information, such as RAN side information of the first tunnel.

Referring to FIG. 11B, the specific steps are as follows:
Step 1: The RAN sends a first request message to the first CN network element. Optionally, the first request message carries first information, such as RAN side information of a first tunnel.
Step 2: The first CN network element sends a response message for the first request message to the RAN.

Optionally, the response message carries third information, such as CN side information of the first tunnel.

Application scenario 5 in the embodiments of this application: The first tunnel is a tunnel between the RAN and the third CN network element.

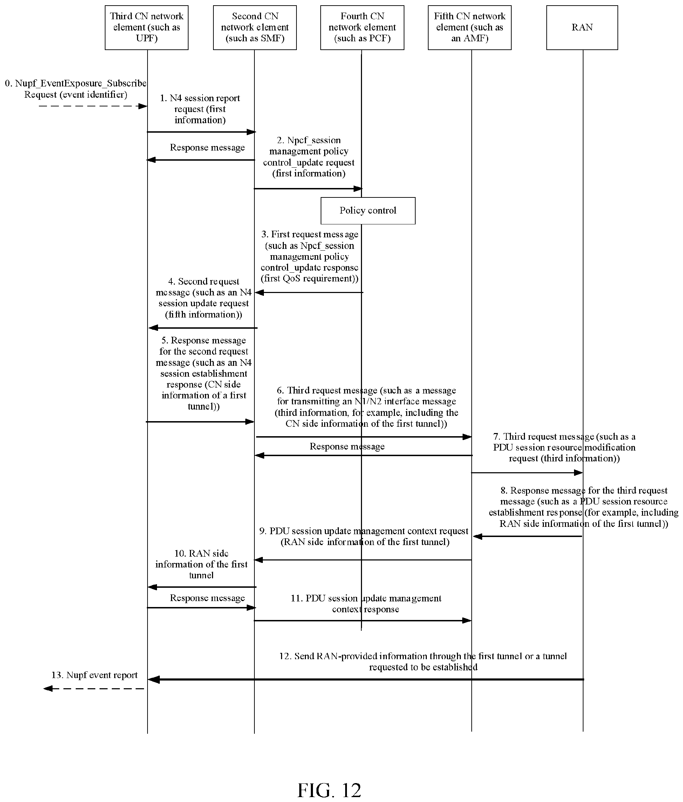

Referring to FIG. 12, the specific steps are as follows:
Step 0: Optionally, a third CN network element (such as a UPF) obtains an event identifier (Event ID).

For example, The UPF obtains an event identifier through Nupf_EventExposure (EventExposure)_Subscribe Request (Subscribe Request).

Step 1: The third CN network element sends first information to a second CN network element (such as an SMF).

For example, the third CN network element sends the first information to the second CN network element through an N4 session report request (N4 Session Report Request).

Step 2: The second CN network element sends the first information to a fourth CN network element (such as a PCF).

For example, the second CN network element sends the first information to a fourth CN network element through Npcf_session management policy control (SMPolicyControl)_update request (Update request).

Step 3: The fourth CN network element sends a first request message to the second CN network element.

For example, the fourth CN network element sends the first request message through Npcf_session management policy control (SMPolicyControl)_update response (Update response), where the first request message carries a first QoS requirement.

Step 4: The second CN network element sends a second request message to the third CN network element.

Optionally, the second request message may be an N4 session update request, and the second request message carries fifth information.

Step 5: The third CN network element sends a response message for the second request message to the second CN network element.

Optionally, the response message in this step may be an N4 session establishment response, where the response message may carry CN side information of the first tunnel.

Step 6: The second CN network element sends a third request message to a fifth CN network element (such as an AMF).

Optionally, the third request message may be a message for transmitting an N1/N2 interface message, and the third request message carries third information, for example, including CN side information of the first tunnel.

Step 7: The fifth CN network element sends a third request message to the RAN.

Optionally, the third request message may be a PDU session resource modification request, and the third request message carries third information.

Step 8: The RAN sends a response message for the third request message to the fifth CN network element.

Optionally, the response message may be a PDU session resource establishment response, where the response message may include RAN side information of the first tunnel.

Step 9: The fifth CN network element sends a PDU session update management context request to the second CN network element, carrying RAN side information of the first tunnel.

Step 10: The second CN network element sends the RAN side information of the first tunnel to the third CN network element.

Step 11: After the second CN network element receives a response message from the third CN network element, the second CN network element sends a PDU session update session management context response to the fifth CN network element.

Step 12: The RAN sends the RAN-provided information to the third CN network element through the first tunnel or a tunnel requested to be established.

Step 13: Optionally, the third CN network element reports a Nupf event.

Application scenario 6 in the embodiments of this application: The first tunnel is a tunnel between a RAN and a PCF.

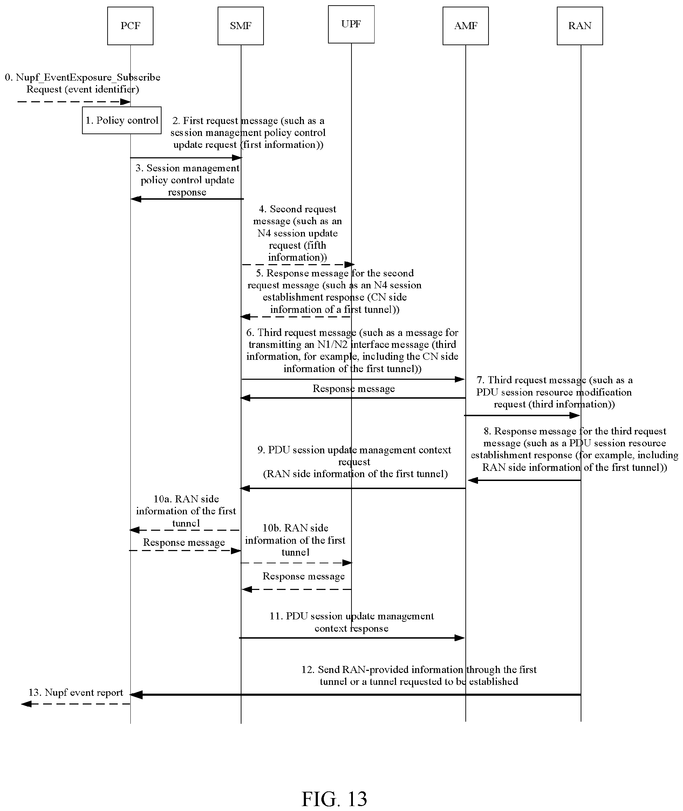

Referring to FIG. 13, the specific steps are as follows:
Step 0: Optionally, a PCF obtains a Nupf event discovery subscription request, carrying an event identifier.
Step 1: The PCF executes a policy decision.
Step 2: The PCF sends a first request message to an SMF.

For example, the PCF sends a first request message to the SMF through a session management policy update request, where the first request message carries first information.

Step 3: The SMF sends a session management policy control update response to the PCF.

Step 4: Optionally, the SMF sends a second request message to the UPF.

Optionally, the second request message may be an N4 session update request, and the second request message may carry fifth information.

Step 5: Optionally, the UPF sends a response message for the second request message to the SMF.

Optionally, the response message for the second request message may be an N4 session establishment response, for example, including CN side information of the first tunnel.

Step 6: The SMF sends a third request message to an AMF.

Optionally, the third request message may be a message for transmitting an N1/N2 interface message, and the third request message may carry third information, for example, including CN side information of the first tunnel.

Step 7: The AMF sends a third request message to the RAN.

Optionally, the third request message in this step may be a PDU session resource modification request, and the third request message may carry the third information.

Step 8: The RAN sends a response message for the third request message to the AMF.

Optionally, the response message may be a PDU session resource establishment response, for example, including RAN side information of the first tunnel.

Step 9: The AMF sends a PDU session update session management context request to the SMF, carrying the RAN side information of the first tunnel.

Step 10a: Optionally, the SMF sends the RAN side information of the first tunnel to the PCF.

Step 10b: Optionally, after the SMF receives a response message from the PCF, the SMF sends the RAN side information of the first tunnel to the UPF.

Step 11: The SMF sends a PDU session update session management context response to the AMF.

Step 12: The RAN sends the RAN-provided information to the PCF through the first tunnel or the tunnel requested to be established.

Step 13: Optionally, the PCF reports a Nupf event.

It should be noted that when the PCF belongs to the first CN network element, steps 4 and 5 may not need to be executed between the SMF and the UPF.

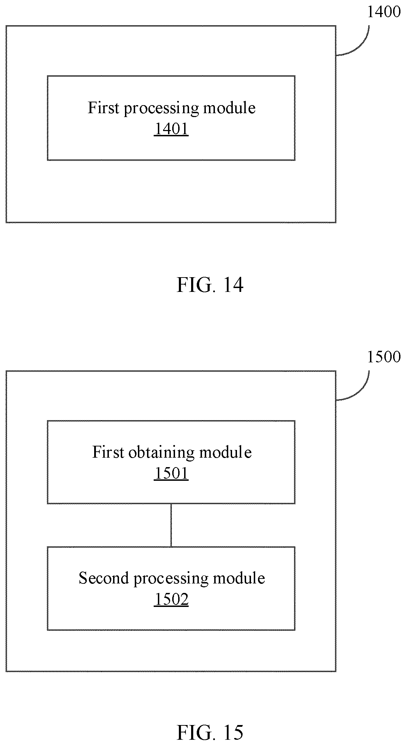

Referring to FIG. 14, an embodiment of this application provides a communication device, where the communication device is a first communication device, and the communication device 1400 includes:
a first processing module 1401, configured to perform a first operation; where
the first operation includes at least one of the following:
   allocating an identifier of a first tunnel;
   allocating information about a first endpoint of the first tunnel;
   allocating an identifier of a tunnel, where the identifier of the tunnel does not belong to a range of tunnel identifiers allocatable by a terminal, and/or the identifier of the tunnel belongs to a range of the identifier of the first tunnel; and
   sending first information, where the first information includes at least one of the following: a first message, and first request information used for establishing a tunnel or establishing the first tunnel;
   where
   the first message is one of the following: a first message for establishing a tunnel and/or allocating a tunnel resource, and a first message for requesting establishment of the first tunnel; and
   the first request information used for establishing a tunnel or establishing the first tunnel includes at least one of the following: a first request, a first indication, a first quality of service QoS requirement, the identifier of the first tunnel or an identifier of a tunnel requested to be established, a first data network name DNN, a first slice, core network CN side information of the first tunnel or CN side information of the tunnel requested to be established, radio access network RAN side information of the first tunnel or RAN side information of the tunnel requested to be established, and address information or index information of a first CN network element;
   where
   the first request is used for requesting establishment of the first tunnel; and the first indication is used to indicate that the tunnel requested to be established is the first tunnel;
   the first QoS requirement is one of the following: a QoS requirement for first data and a QoS requirement for the first tunnel, where the first data is data that carries RAN-provided information;
   the first DNN is one of the following: a DNN used for establishing the first tunnel and a DNN used for transmitting the first data; and
   the first slice is one of the following: a slice used for establishing the first tunnel and a slice used for transmitting the first data;
   where
   the first tunnel includes one or more of the following: a tunnel between a RAN network element and a first CN network element, a tunnel used for exposing RAN-provided information, and a tunnel not used for transmitting data between a terminal and a network.

In an implementation, the first tunnel further includes a tunnel in a first PDU session;
the first PDU session is a PDU session established by a terminal; and
information that a RAN is able to provide includes at least one of the following: information that is related to the first PDU session and that the RAN is able to provide, information that is related to a QoS flow in the first PDU session and that the RAN is able to provide, and information that is related to a service carried by the first PDU session and that the RAN is able to provide.

In an implementation, the first processing module 1401 performs a first operation in a case that a first condition is met;
the first condition includes one or more of the following:
the first communication device has received a subscription request for the RAN-provided information;
the first communication device has received a measurement requirement for the RAN-provided information;
the RAN network element supports exposure of the RAN-provided information;
the first communication device supports requesting to establish the first tunnel; and
the first communication device obtains the address information or index information of the first CN network element;
where
the first CN network element supports assisting the RAN network element in exposing the RAN-provided information.

In an implementation, the first processing module 1401 is further configured to obtain second information.

The first processing module 1401 is further configured to perform the first operation based on the obtained second information;
where
the second information includes one or more of the following:
a subscription request for the RAN-provided information;
a measurement requirement for the RAN-provided information;
the RAN network element supports exposure of the RAN-provided information;
the first communication device supports requesting to establish the first tunnel; and
address information or index information of the first CN network element;
where
the first CN network element supports assisting the RAN network element in exposing the RAN-provided information.

In an implementation, the sending first information includes:
sending the first information to at least one of a second CN network element, a second communication device, and a RAN network element.

In an implementation, the first communication device further includes:
a first sending module, configured to send third information to the RAN network element; where
the third information includes at least one of the following: a third message, and third request information for establishing a tunnel, establishing a subtunnel, establishing the first tunnel, and/or establishing a first subtunnel;
where
the third message is one of the following: a third message for establishing a tunnel and/or allocating a tunnel resource, and a third message for requesting establishment of the first tunnel; and
the third request information for establishing a tunnel, establishing a subtunnel, establishing the first tunnel, and/or establishing a first subtunnel includes at least one of the following: a first request, a first indication, a first QoS requirement, an identifier of the first tunnel or an identifier of the tunnel requested to be established, a first DNN, a first slice, CN side information of the first tunnel or CN side information of the established tunnel, exposure mode information of the RAN-provided information, a first QoS parameter, and a first QoS rule; where
the exposure mode information of the RAN-provided information includes at least one of the following: description information of the RAN-provided information, and a exposure mode of the RAN-provided information; and
the exposure mode of the RAN-provided information is used to indicate that the RAN-provided information is exposed through the established tunnel or the first tunnel.

In an implementation, a granularity of the RAN-provided information includes one or more of the following:
per RAN granularity;
per terminal granularity;
per terminal service granularity;
per terminal tunnel granularity;
per PDU session of terminal granularity; and
per QoS flow of terminal granularity.

The communication device provided in this embodiment of this application is capable of implementing the processes implemented in the method embodiment in FIG. 3, with the same technical effects achieved. To avoid repetition, details are not described herein again.

Referring to FIG. 15, an embodiment of this application provides a communication device, where the communication device is a second communication device, and the communication device 1500 includes:
a first obtaining module 1501, configured to obtain fourth information, where the fourth information includes at least one of the following: first information and a first QoS requirement; and
a second processing module 1502, configured to perform a second operation based on the fourth information; where
the second operation includes at least one of the following:
   determining to establish a first tunnel or determining to establish a requested tunnel;
   determining to establish a first subtunnel or determining to establish a subtunnel of a requested tunnel;
   determining a QoS context of the first tunnel or determining a QoS context of a tunnel requested to be established;
   based on a first QoS requirement, performing at least one of the following: establishing the first tunnel, mapping a first QoS parameter, allocating an identifier of the first tunnel, determining a first QoS rule, establishing the first subtunnel, and allocating an identifier of the first subtunnel;
   determining a first CN network element, where the determining a first CN network element includes at least one of the following: selecting the first CN network element based on a first DNN and/or a first slice, determining the first CN network element based on address information or index information of the first CN network element, querying the address information of the first CN network element based on the index information of the first CN network element, determining the first CN network element to be a CN network element connected to a first PDU session, and being a CN network element that sends the first information;
   sending fifth information to the first CN network element, where the fifth information includes at least one of the following: a second message, and second request information used for establishing a tunnel, establishing a subtunnel, establishing the first tunnel, and/or establishing the first subtunnel; and
   sending third information to a third CN network element, a fifth CN network element, and/or a RAN network element, where the third information includes at least one of the following: a third message, and third request information used for establishing a tunnel, establishing a subtunnel, establishing the first tunnel, and/or establishing the first subtunnel;
   where
   the second message is one of the following: a second message for establishing a tunnel and/or allocating a tunnel resource, and a second message for requesting establishment of the first tunnel and/or the first subtunnel; and
   the second request information for establishing a tunnel, establishing a subtunnel, establishing the first tunnel, and/or establishing the first subtunnel includes at least one of the following: a first request, a first indication, a first QoS requirement, an identifier of the first tunnel or an identifier of the tunnel requested to be established, the first DNN, the first slice, RAN side information of the first tunnel or RAN side information of the tunnel requested to be established, the first QoS parameter, and the first QoS rule;
   where
   the third message is one of the following: a third message for establishing a tunnel and/or allocating a tunnel resource, and a third message for requesting establishment of the first tunnel and/or the first subtunnel; and
   the third request information for establishing a tunnel, establishing a subtunnel, establishing the first tunnel, and/or establishing the first subtunnel includes at least one of the following: the first request, the first indication, the first QoS requirement, the identifier of the first tunnel or the identifier of the tunnel requested to be established, the first DNN, the first slice, CN side information of the first tunnel or CN side information of the established tunnel, exposure mode information of the RAN-provided information, the first QoS parameter, and the first QoS rule; where
   the exposure mode information of the RAN-provided information includes at least one of the following: description information of the RAN-provided information, and a exposure mode of the RAN-provided information;
   the exposure mode of the RAN-provided information is used to indicate that the RAN-provided information is exposed through the established tunnel or the first tunnel;
   the first QoS requirement includes one of the following: a QoS requirement for the first data, a QoS requirement for the first tunnel, and a QoS requirement for the first subtunnel;
   the first QoS rule includes at least one of the following: a QoS rule for the first data, a QoS rule for the first tunnel, a QoS rule for the first subtunnel, a QoS rule for a tunnel requested to be established, and a QoS rule for a subtunnel requested to be established;
   the first QoS parameter includes at least one of the following: QoS information of the first data, a QoS parameter for the first tunnel, a QoS parameter for the first subtunnel, a QoS parameter for the tunnel requested to be established, and a QoS parameter for the subtunnel requested to be established;
   the first data is data carrying the RAN-provided information; and
   the first subtunnel is a tunnel in the first tunnel.

In an implementation, the first obtaining module 1501 is further configured to receive the fourth information from at least one of the third CN network element, a first communication device, a fifth communication device, a fourth CN network element, and a CN network element.

In an implementation, a granularity of the RAN-provided information includes one or more of the following:
per RAN granularity;
per terminal granularity;
per terminal service granularity;
per terminal tunnel granularity;
per PDU session of terminal granularity; and
per QoS flow of terminal granularity.

The communication device provided in this embodiment of this application is capable of implementing the processes implemented in the method embodiment in FIG. 4, with the same technical effects achieved. To avoid repetition, details are not described herein again.

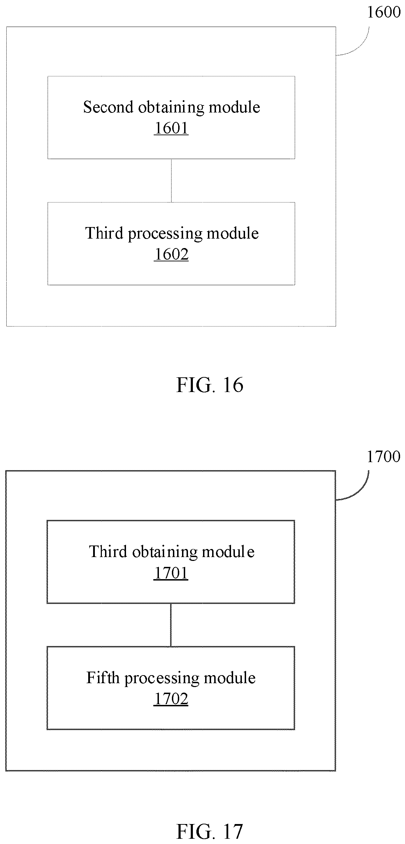

Referring to FIG. 16, an embodiment of this application provides a communication device, where the communication device is a RAN network element, and the communication device 1600 includes:
a second obtaining module 1601, configured to obtain sixth information, where the sixth information includes at least one of the following: a first message, first request information used for establishing a tunnel or establishing a first tunnel, a third message, third request information for establishing a tunnel, establishing a subtunnel, establishing the first tunnel, and/or establishing a first subtunnel, exposure mode information of RAN-provided information, and address information or index information of a first CN network element; and
a third processing module 1602, configured to perform a third operation based on the sixth information; where
the third operation includes at least one of the following:
   establishing the first tunnel or establishing a requested tunnel;
   allocating RAN side information of the first tunnel;
   sending RAN side information of the first tunnel;
   performing at least one of the following for an established first tunnel or a requested tunnel established: not allocating a radio resource, and not mapping a radio tunnel;
   performing at least one of the following for the established first subtunnel or a subtunnel of the requested tunnel established: not allocating a radio resource, and not mapping a radio tunnel;
   sending, through the first tunnel or a tunnel requested to be established, the RAN-provided information;
   sending, through the first subtunnel or a subtunnel of the tunnel requested to be established, the RAN-provided information;
   selecting a tunnel according to a first QoS rule to send the RAN-provided information;
   guaranteeing QoS of the first data or the first tunnel based on a first QoS parameter;
   selecting a subtunnel according to the first QoS rule to send the RAN-provided information;
   guaranteeing QoS of the first subtunnel based on the first QoS parameter; and
   sending the RAN-provided information to the first CN network element;
   where
   the first request information used for establishing a tunnel or establishing the first tunnel includes at least one of the following: a first request, a first indication, a first quality of service QoS requirement, an identifier of the first tunnel or an identifier of the tunnel requested to be established, a first data network name DNN, a first slice, CN side information of the first tunnel or CN side information of the tunnel requested to be established, radio access network RAN side information of the first tunnel or RAN side information of the tunnel requested to be established, and address information or index information of the first CN network element;
   the third request information for establishing a tunnel, establishing a subtunnel, establishing the first tunnel, and/or establishing the first subtunnel includes at least one of the following: the first request, the first indication, the first QoS requirement, the identifier of the first tunnel or the identifier of the tunnel requested to be established, the first DNN, the first slice, the CN side information of the first tunnel or the CN side information of the established tunnel, exposure mode information of the RAN-provided information, the first QoS parameter, and the first QoS rule;
   the exposure mode information is used to indicate that the RAN-provided information is exposed through the established tunnel or the first tunnel;
   the exposure mode information of the RAN-provided information includes at least one of the following: description information of the RAN-provided information, and a exposure mode of the RAN-provided information;
   the exposure mode of the RAN-provided information is used to indicate that the RAN-provided information is exposed through the established tunnel or the first tunnel;
   the first QoS requirement includes one of the following: a QoS requirement for the first data, a QoS requirement for the first tunnel, and a QoS requirement for the first subtunnel;
   the first QoS rule includes at least one of the following: a QoS rule for the first data, a QoS rule for the first tunnel, a QoS rule for the first subtunnel, a QoS rule for the tunnel requested to be established, and a QoS rule for a subtunnel requested to be established;
   the first QoS parameter includes at least one of the following: QoS information of the first data, a QoS parameter for the first tunnel, a QoS parameter for the first subtunnel, a QoS parameter for the tunnel requested to be established, and a QoS parameter for the subtunnel requested to be established;
   the first data is data carrying the RAN-provided information; and
   the first subtunnel is a tunnel in the first tunnel.

In an implementation, in a case that the sixth information includes the first request information used for establishing a tunnel or establishing the first tunnel,
the second obtaining module 1601 is further configured to receive the first request information used for establishing a tunnel or establishing the first tunnel from at least one of a first communication device, a third CN network element, the first CN network element, and a CN network element;
   and/or
in a case that the sixth information includes the third request information for establishing a tunnel, establishing a subtunnel, establishing the first tunnel, and/or establishing the first subtunnel,
the second obtaining module 1601 is further configured to receive the third request information for establishing a tunnel, establishing a subtunnel, establishing the first tunnel, and/or establishing the first subtunnel from at least one of a second communication device, a second CN network element, the first CN network element, the third CN network element, a fifth CN network element, and the CN network element.

In an implementation, the communication device further includes:
a fourth processing module, configured to perform a first operation, where the first operation includes at least one of the following:
   allocating an identifier of the first tunnel;
   allocating information about a first endpoint of the first tunnel;
   allocating an identifier of a tunnel, where the identifier of the tunnel does not belong to a range of tunnel identifiers allocatable by a terminal, and/or the identifier of the tunnel belongs to a range of the identifier of the first tunnel; and
   sending first information, where the first information includes at least one of the following: the first message, and the first request information used for establishing a tunnel or establishing the first tunnel.

The communication device provided in this embodiment of this application is capable of implementing the processes implemented in the method embodiment in FIG. 5, with the same technical effects achieved. To avoid repetition, details are not described herein again.

Referring to FIG. 17, an embodiment of this application provides a communication device, where the communication device is a first CN network element, and the communication device 1700 includes:
a third obtaining module 1701, configured to obtain fifth information, where the fifth information includes at least one of the following: a second message, and second request information used for establishing a tunnel, establishing a subtunnel, establishing a first tunnel, and/or establishing a first subtunnel; and
a fifth processing module 1702, configured to perform a fourth operation based on the fifth information; where
the fourth operation includes at least one of the following:
   establishing a requested tunnel or establishing the first tunnel;
   obtaining, through the first tunnel or a tunnel requested to be established, RAN-provided information;
   obtaining, from a RAN network element, the RAN-provided information;
   assisting the RAN network element in exposing information provided by the RAN network element;
   allocating CN side information of the tunnel requested to be established or the first tunnel; and
   identifying, according to a first QoS rule, data received from a tunnel as the RAN-provided information; where
   the second message is one of the following: a second message for establishing a tunnel and/or allocating a tunnel resource, and a second message for requesting establishment of the first tunnel and/or the first subtunnel; and
   the second request information for establishing a tunnel, establishing a subtunnel, establishing the first tunnel, and/or establishing the first subtunnel includes at least one of the following: a first request, a first indication, a first QoS requirement, an identifier of the first tunnel or an identifier of the tunnel requested to be established, a first DNN, a first slice, RAN side information of the first tunnel or RAN side information of the tunnel requested to be established, a first QoS parameter, and the first QoS rule.

The communication device provided in this embodiment of this application is capable of implementing the processes implemented in the method embodiment in FIG. 6, with the same technical effects achieved. To avoid repetition, details are not described herein again.

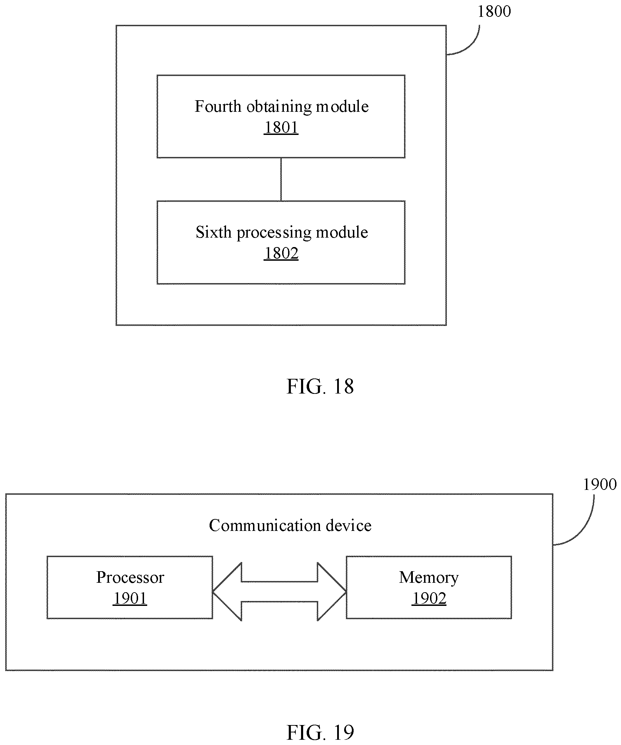

Referring to FIG. 18, an embodiment of this application provides a communication device, where communication device is a fourth CN network element, and the communication device 1800 includes:
a fourth obtaining module 1801, configured to obtain seventh information, where the seventh information includes at least one of the following: a subscription request for RAN-provided information, a measurement requirement for the RAN-provided information, the RAN network element supporting exposure of the RAN-provided information, a first CN network element supporting to assist the RAN network element in exposure of the RAN-provided information, a first message, and first request information for establishing a tunnel or establishing a first tunnel; and
a sixth processing module 1802, configured to perform a fifth operation based on the seventh information; where
the fifth operation includes at least one of the following:
   determining a first QoS requirement; and
   sending the first QoS requirement;
   where
   the first QoS requirement includes one of the following: a QoS requirement for first data, a QoS requirement for a first tunnel, and a QoS requirement for a first subtunnel; and
   the first data is data carrying the RAN-provided information.

The communication device provided in this embodiment of this application is capable of implementing the processes implemented in the method embodiment in FIG. 7, with the same technical effects achieved. To avoid repetition, details are not described herein again.

An embodiment of this application further provides a computer-readable storage medium, where a computer program is stored in the computer readable storage medium. When the computer program is executed by a processor, the processes of the foregoing method embodiments are implemented, with the same technical effects achieved. To avoid repetition, details are not described herein again. The computer-readable storage medium is, for example, a read-only memory (Read-Only Memory, ROM for short), a random access memory (Random Access Memory, RAM for short), a magnetic disk, or an optical disc.

An embodiment of this application further provides a chip, where the chip includes a processor and a communication interface. The communication interface is coupled to the processor, and the processor is configured to run a program or an instruction to implement the processes of the foregoing method embodiments shown in FIG. 3 to FIG. 7, with the same technical effects achieved. To avoid repetition, details are not described herein again.

It should be understood that the chip mentioned in the embodiments of this application may also be referred to as a system-level chip, a system chip, a chip system, a system-on-chip, or the like.

An embodiment of this application further provides a communications system, where the communications system includes a terminal and a network-side device. The network-side device is configured to perform the processes of the method embodiments shown in FIG. 3 to FIG. 7, with the same technical effects achieved. To avoid repetition, details are not described herein again.

Optionally, as shown in FIG. 19, an embodiment of this application further provides a communication device 1900, including a processor 1901, a memory 1902, and a program or instructions stored in the memory 1902 and capable of running on the processor 1901. When the program or the instructions are executed by the processor 1901, the steps of the foregoing method embodiments in FIG. 3 to FIG. 7 are implemented, with the same technical effects achieved. To avoid repetition, details are not described herein again.

It should be noted that in this specification, the term "include", "comprise", or any of their variants are intended to cover a non-exclusive inclusion, so that a process, a method, an article, or an apparatus that includes a list of elements not only includes those elements but also includes other elements that are not expressly listed, or further includes elements inherent to such process, method, article, or apparatus. In absence of more constraints, an element preceded by "includes a..." does not preclude the existence of other identical elements in the process, method, article, or apparatus that includes the element.

According to the description of the foregoing implementations, persons skilled in the art can clearly understand that the method in the foregoing embodiments may be implemented by software in combination with a necessary general hardware platform. Certainly, the method in the foregoing embodiments may alternatively be implemented by hardware. However, in many cases, the former is a preferred implementation. Based on such an understanding, the technical solutions of this application essentially or the part contributing to the prior art may be implemented in a form of a software product. The computer software product is stored in a storage medium (such as a ROM/RAM, a magnetic disk, or an optical disc), and includes several instructions for instructing a terminal (which may be a mobile phone, a computer, a server, an air conditioner, a network device, or the like) to perform the methods described in the embodiments of this application.

The foregoing describes the embodiments of this application with reference to the accompanying drawings. However, this application is not limited to the foregoing specific implementations. These specific implementations are merely illustrative rather than restrictive. Inspired by this application, persons of ordinary skill in the art may develop many other forms without departing from the essence of this application and the protection scope of the claims, and all such forms shall fall within the protection scope of this application.

## Claims

1. An information exposure method, comprising:
performing, by a first communication device, a first operation; wherein
the first operation comprises at least one of the following:
allocating an identifier of a first tunnel;
allocating information about a first endpoint of the first tunnel;
allocating an identifier of a tunnel, wherein the identifier of the tunnel does not belong to a range of tunnel identifiers allocatable by a terminal, and/or the identifier of the tunnel belongs to a range of the identifier of the first tunnel; and
sending first information, wherein the first information comprises at least one of the following: a first message, and first request information used for establishing a tunnel or establishing the first tunnel;
wherein the first message is one of the following: a first message for establishing a tunnel and/or allocating a tunnel resource, and a first message for requesting establishment of the first tunnel; and
the first request information used for establishing a tunnel or establishing the first tunnel comprises at least one of the following: a first request, a first indication, a first quality of service QoS requirement, the identifier of the first tunnel or an identifier of a tunnel requested to be established, a first data network name DNN, a first slice, core network CN side information of the first tunnel or CN side information of the tunnel requested to be established, radio access network RAN side information of the first tunnel or RAN side information of the tunnel requested to be established, and address information or index information of a first CN network element;
wherein the first request is used for requesting establishment of the first tunnel; and the first indication is used to indicate that the tunnel requested to be established is the first tunnel;
the first QoS requirement is one of the following: a QoS requirement for first data and a QoS requirement for the first tunnel, wherein the first data is data that carries RAN-provided information;
the first DNN is one of the following: a DNN used for establishing the first tunnel and a DNN used for transmitting the first data; and
the first slice is one of the following: a slice used for establishing the first tunnel and a slice used for transmitting the first data;
wherein the first tunnel comprises one or more of the following: a tunnel between a RAN network element and a first CN network element, a tunnel used for exposing RAN-provided information, and a tunnel not used for transmitting data between a terminal and a network.

2. The method according to claim 1, wherein the first tunnel further comprises: a tunnel in a first PDU session; wherein
the first PDU session is a PDU session established by a terminal; and
information that a RAN is able to provide comprises at least one of the following: information that is related to the first PDU session and that the RAN is able to provide, information that is related to a QoS flow in the first PDU session and that the RAN is able to provide, and information that is related to a service carried by the first PDU session and that the RAN is able to provide.

3. The method according to claim 1, wherein the performing, by a first communication device, a first operation comprises:
performing, by the first communication device, the first operation in a case that a first condition is met; wherein
the first condition comprises one or more of the following:
the first communication device has received a subscription request for the RAN-provided information;
the first communication device has received a measurement requirement for the RAN-provided information;
the RAN network element supports exposure of the RAN-provided information;
the first communication device supports requesting to establish the first tunnel; and
the first communication device obtains the address information or the index information of the first CN network element;
wherein the first CN network element supports assisting the RAN network element in exposing the RAN-provided information.

4. The method according to claim 1, wherein the performing, by a first communication device, a first operation comprises:
obtaining, by the first communication device, second information; and
performing, by the first communication device, the first operation based on the obtained second information;
wherein the second information comprises one or more of the following:
a subscription request for the RAN-provided information;
a measurement requirement for the RAN-provided information;
the RAN network element supports exposure of the RAN-provided information;
the first communication device supports requesting to establish the first tunnel; and
the address information or the index information of the first CN network element;
wherein the first CN network element supports assisting the RAN network element in exposing the RAN-provided information.

5. The method according to claim 1, wherein the sending first information comprises:
sending the first information to at least one of a second CN network element, a second communication device, and a RAN network element.

6. The method according to claim 1, wherein the method further comprises:
sending, by the first communication device, third information to the RAN network element; wherein
the third information comprises at least one of the following: a third message, and third request information for establishing a tunnel, establishing a subtunnel, establishing the first tunnel, and/or establishing a first subtunnel;
wherein the third message is one of the following: a third message for establishing a tunnel and/or allocating a tunnel resource, and a third message for requesting establishment of the first tunnel; and
the third request information for establishing a tunnel, establishing a subtunnel, establishing the first tunnel, and/or establishing a first subtunnel comprises at least one of the following: a first request, a first indication, a first QoS requirement, an identifier of the first tunnel or an identifier of the tunnel requested to be established, a first DNN, a first slice, CN side information of the first tunnel or CN side information of an established tunnel, exposure mode information of the RAN-provided information, a first QoS parameter, and a first QoS rule; wherein
the exposure mode information of the RAN-provided information comprises at least one of the following: description information of the RAN-provided information, and a exposure mode of the RAN-provided information;
the exposure mode of the RAN-provided information is used to indicate that the RAN-provided information is exposed through the established tunnel or the first tunnel;
the first QoS requirement comprises one of the following: a QoS requirement for the first data, a QoS requirement for the first tunnel, and a QoS requirement for the first subtunnel;
the first QoS rule comprises at least one of the following: a QoS rule for the first data, a QoS rule for the first tunnel, a QoS rule for the first subtunnel, a QoS rule for a tunnel requested to be established, and a QoS rule for a subtunnel requested to be established;
the first QoS parameter comprises at least one of the following: QoS information of the first data, a QoS parameter for the first tunnel, a QoS parameter for the first subtunnel, a QoS parameter for the tunnel requested to be established, and a QoS parameter for the subtunnel requested to be established;
the first data is data carrying the RAN-provided information; and
the first subtunnel is a tunnel in the first tunnel.

7. The method according to claim 1, wherein a granularity of the RAN-provided information comprises one or more of the following:
per RAN granularity;
per terminal granularity;
per terminal service granularity;
per terminal tunnel granularity;
per PDU session of terminal granularity; and
per QoS flow of terminal granularity.

8. An information exposure method, comprising:
obtaining, by a second communication device, fourth information, wherein the fourth information comprises at least one of the following: first information and a first QoS requirement; and
performing, by the second communication device, a second operation based on the fourth information; wherein
the second operation comprises at least one of the following:
determining to establish a first tunnel or determining to establish a requested tunnel;
determining to establish a first subtunnel or determining to establish a subtunnel of a requested tunnel;
determining a QoS context of the first tunnel or determining a QoS context of a tunnel requested to be established;
based on a first QoS requirement, performing at least one of the following: establishing the first tunnel, mapping a first QoS parameter, allocating an identifier of the first tunnel, determining a first QoS rule, establishing the first subtunnel, and allocating an identifier of the first subtunnel;
determining a first CN network element, wherein the determining a first CN network element comprises at least one of the following: selecting the first CN network element based on a first DNN and/or a first slice, determining the first CN network element based on address information or index information of the first CN network element, querying the address information of the first CN network element based on the index information of the first CN network element, determining the first CN network element to be a CN network element connected to a first PDU session, and determining the first CN network element to be a CN network element that sends the first information;
sending fifth information to the first CN network element, wherein the fifth information comprises at least one of the following: a second message, and second request information used for establishing a tunnel, establishing a subtunnel, establishing the first tunnel, and/or establishing the first subtunnel; and
sending third information to a third CN network element, a fifth CN network element, and/or a RAN network element, wherein the third information comprises at least one of the following: a third message, and third request information used for establishing a tunnel, establishing a subtunnel, establishing the first tunnel, and/or establishing the first subtunnel;
wherein the second message is one of the following: a second message for establishing a tunnel and/or allocating a tunnel resource, and a second message for requesting establishment of the first tunnel and/or the first subtunnel; and
the second request information for establishing a tunnel, establishing a subtunnel, establishing the first tunnel, and/or establishing the first subtunnel comprises at least one of the following: a first request, a first indication, a first QoS requirement, an identifier of the first tunnel or an identifier of the tunnel requested to be established, the first DNN, the first slice, RAN side information of the first tunnel or RAN side information of the tunnel requested to be established, the first QoS parameter, and the first QoS rule;
wherein the third message is one of the following: a third message for establishing a tunnel and/or allocating a tunnel resource, and a third message for requesting establishment of the first tunnel and/or the first subtunnel; and
the third request information for establishing a tunnel, establishing a subtunnel, establishing the first tunnel, and/or establishing the first subtunnel comprises at least one of the following: the first request, the first indication, the first QoS requirement, the identifier of the first tunnel or the identifier of the tunnel requested to be established, the first DNN, the first slice, CN side information of the first tunnel or CN side information of an established tunnel, exposure mode information of the RAN-provided information, the first QoS parameter, and the first QoS rule; wherein
the exposure mode information of the RAN-provided information comprises at least one of the following: description information of the RAN-provided information, and a exposure mode of the RAN-provided information;
the exposure mode of the RAN-provided information is used to indicate that the RAN-provided information is exposed through the established tunnel or the first tunnel;
the first QoS requirement comprises one of the following: a QoS requirement for the first data, a QoS requirement for the first tunnel, and a QoS requirement for the first subtunnel;
the first QoS rule comprises at least one of the following: a QoS rule for the first data, a QoS rule for the first tunnel, a QoS rule for the first subtunnel, a QoS rule for a tunnel requested to be established, and a QoS rule for a subtunnel requested to be established;
the first QoS parameter comprises at least one of the following: QoS information of the first data, a QoS parameter for the first tunnel, a QoS parameter for the first subtunnel, a QoS parameter for the tunnel requested to be established, and a QoS parameter for the subtunnel requested to be established;
the first data is data carrying the RAN-provided information; and
the first subtunnel is a tunnel in the first tunnel.

9. The method according to claim 8, wherein the obtaining, by a second communication device, fourth information comprises: receiving, by the second communication device, the fourth information from at least one of the third CN network element, a first communication device, a fifth communication device, a fourth CN network element, and a CN network element.

10. The method according to claim 8, wherein a granularity of the RAN-provided information comprises one or more of the following:
per RAN granularity;
per terminal granularity;
per terminal service granularity;
per terminal tunnel granularity;
per PDU session of terminal granularity; and
per QoS flow of terminal granularity.

11. An information exposure method, comprising:
obtaining, by a RAN network element, sixth information, wherein the sixth information comprises at least one of the following: a first message, first request information used for establishing a tunnel or establishing a first tunnel, a third message, third request information for establishing a tunnel, establishing a subtunnel, establishing the first tunnel, and/or establishing a first subtunnel, exposure mode information of RAN-provided information, and address information or index information of a first CN network element; and
performing, by the RAN network element, a third operation based on the sixth information; wherein
the third operation comprises at least one of the following:
establishing the first tunnel or establishing a requested tunnel;
allocating RAN side information of the first tunnel;
sending RAN side information of the first tunnel;
performing at least one of the following for an established first tunnel or a requested tunnel established: not allocating a radio resource, and not mapping a radio tunnel;
performing at least one of the following for the established first subtunnel or a subtunnel of the requested tunnel established: allocating a radio resource, and mapping a radio tunnel;
sending, through the first tunnel or a tunnel requested to be established, the RAN-provided information;
sending, through the first subtunnel or a subtunnel of the tunnel requested to be established, the RAN-provided information;
selecting a tunnel according to a first QoS rule to send the RAN-provided information;
guaranteeing QoS of the first data or the first tunnel based on a first QoS parameter;
selecting a subtunnel according to the first QoS rule to send the RAN-provided information;
guaranteeing QoS of the first subtunnel based on the first QoS parameter; and
sending the RAN-provided information to the first CN network element;
wherein the first request information used for establishing a tunnel or establishing the first tunnel comprises at least one of the following: a first request, a first indication, a first quality of service QoS requirement, an identifier of the first tunnel or an identifier of the tunnel requested to be established, a first data network name DNN, a first slice, CN side information of the first tunnel or CN side information of the tunnel requested to be established, radio access network RAN side information of the first tunnel or RAN side information of the tunnel requested to be established, and address information or index information of the first CN network element;
the third request information for establishing a tunnel, establishing a subtunnel, establishing the first tunnel, and/or establishing the first subtunnel comprises at least one of the following: the first request, the first indication, the first QoS requirement, the identifier of the first tunnel or the identifier of the tunnel requested to be established, the first DNN, the first slice, the CN side information of the first tunnel or the CN side information of an established tunnel, exposure mode information of the RAN-provided information, the first QoS parameter, and the first QoS rule;
the exposure mode information is used to indicate that the RAN-provided information is exposed through the established tunnel or the first tunnel;
the exposure mode information of the RAN-provided information comprises at least one of the following: description information of the RAN-provided information, and a exposure mode of the RAN-provided information;
the exposure mode of the RAN-provided information is used to indicate that the RAN-provided information is exposed through the established tunnel or the first tunnel;
the first QoS requirement comprises one of the following: a QoS requirement for the first data, a QoS requirement for the first tunnel, and a QoS requirement for the first subtunnel;
the first QoS rule comprises at least one of the following: a QoS rule for the first data, a QoS rule for the first tunnel, a QoS rule for the first subtunnel, a QoS rule for the tunnel requested to be established, and a QoS rule for a subtunnel requested to be established;
the first QoS parameter comprises at least one of the following: QoS information of the first data, a QoS parameter for the first tunnel, a QoS parameter for the first subtunnel, a QoS parameter for the tunnel requested to be established, and a QoS parameter for the subtunnel requested to be established;
the first data is data carrying the RAN-provided information; and
the first subtunnel is a tunnel in the first tunnel.

12. The method according to claim 11, wherein in a case that the sixth information comprises the first request information used for establishing a tunnel or establishing the first tunnel,
the obtaining, by a RAN network element, sixth information comprises:
receiving, by the RAN network element, the first request information used for establishing a tunnel or establishing the first tunnel from at least one of a first communication device, a third CN network element, the first CN network element, and a CN network element;
and/or
in a case that the sixth information comprises the third request information for establishing a tunnel, establishing a subtunnel, establishing the first tunnel, and/or establishing the first subtunnel,
the obtaining, by a RAN network element, sixth information comprises:
receiving, by the RAN network element, the third request information for establishing a tunnel, establishing a subtunnel, establishing the first tunnel, and/or establishing the first subtunnel from at least one of a second communication device, a second CN network element, the first CN network element, the third CN network element, a fifth CN network element, and the CN network element.

13. The method according to claim 11, wherein before the step of obtaining, by a RAN network element, sixth information, the method further comprises:
performing, by the RAN network element, a first operation, wherein the first operation comprises at least one of the following:
allocating an identifier of the first tunnel;
allocating information about a first endpoint of the first tunnel;
allocating an identifier of a tunnel, wherein the identifier of the tunnel does not belong to a range of tunnel identifiers allocatable by a terminal, and/or the identifier of the tunnel belongs to a range of the identifier of the first tunnel; and
sending first information, wherein the first information comprises at least one of the following: the first message, and the first request information used for establishing a tunnel or establishing the first tunnel.

14. An information exposure method, comprising:
obtaining, by a fourth communication device, fifth information, wherein the fifth information comprises at least one of the following: a second message, and second request information used for establishing a tunnel, establishing a subtunnel, establishing a first tunnel, and/or establishing a first subtunnel; and
performing, by the fourth communication device, a fourth operation based on the fifth information; wherein
the fourth operation comprises at least one of the following:
establishing a requested tunnel or establishing the first tunnel;
obtaining, through the first tunnel or a tunnel requested to be established, RAN-provided information;
obtaining, from a RAN network element, the RAN-provided information;
assisting the RAN network element in exposing information provided by the RAN network element;
allocating CN side information of the tunnel requested to be established or the first tunnel; and
identifying, according to a first QoS rule, data received from a tunnel as the RAN-provided information; wherein
the second message is one of the following: a second message for establishing a tunnel and/or allocating a tunnel resource, and a second message for requesting establishment of the first tunnel and/or the first subtunnel; and
the second request information for establishing a tunnel, establishing a subtunnel, establishing the first tunnel, and/or establishing the first subtunnel comprises at least one of the following: a first request, a first indication, a first QoS requirement, an identifier of the first tunnel or an identifier of the tunnel requested to be established, a first DNN, a first slice, RAN side information of the first tunnel or RAN side information of the tunnel requested to be established, a first QoS parameter, and the first QoS rule.

15. An information exposure method, comprising:
obtaining, by a fifth communication device, seventh information, wherein the seventh information comprises at least one of the following: a subscription request for RAN-provided information, a measurement requirement for the RAN-provided information, the RAN network element supporting exposure of the RAN-provided information, a first CN network element supporting assisting the RAN network element in exposure of the RAN-provided information, a first message, and first request information for establishing a tunnel or establishing a first tunnel; and
performing, by the fifth communication device, a fifth operation based on the seventh information; wherein
the fifth operation comprises at least one of the following:
determining a first QoS requirement; and
sending the first QoS requirement;
wherein
the first QoS requirement comprises one of the following: a QoS requirement for first data, a QoS requirement for a first tunnel, and a QoS requirement for a first subtunnel; and
the first data is data carrying the RAN-provided information.

16. A communication device, wherein the communication device is a first communication device, comprising:
a first processing module, configured to perform a first operation; wherein
the first operation comprises at least one of the following:
allocating an identifier of a first tunnel;
allocating information about a first endpoint of the first tunnel;
allocating an identifier of a tunnel, wherein the identifier of the tunnel does not belong to a range of tunnel identifiers allocatable by a terminal, and/or the identifier of the tunnel belongs to a range of the identifier of the first tunnel; and
sending first information, wherein the first information comprises at least one of the following: a first message, and first request information used for establishing a tunnel or establishing the first tunnel;
wherein
the first message is one of the following: a first message for establishing a tunnel and/or allocating a tunnel resource, and a first message for requesting establishment of the first tunnel; and
the first request information used for establishing a tunnel or establishing the first tunnel comprises at least one of the following: a first request, a first indication, a first quality of service QoS requirement, the identifier of the first tunnel or an identifier of a tunnel requested to be established, a first data network name DNN, a first slice, core network CN side information of the first tunnel or CN side information of the tunnel requested to be established, radio access network RAN side information of the first tunnel or RAN side information of the tunnel requested to be established, and address information or index information of a first CN network element;
wherein
the first request is used for requesting establishment of the first tunnel; and the first indication is used to indicate that the tunnel requested to be established is the first tunnel;
the first QoS requirement is one of the following: a QoS requirement for first data and a QoS requirement for the first tunnel, wherein the first data is data that carries RAN-provided information;
the first DNN is one of the following: a DNN used for establishing the first tunnel and a DNN used for transmitting the first data; and
the first slice is one of the following: a slice used for establishing the first tunnel and a slice used for transmitting the first data;
wherein
the first tunnel comprises one or more of the following: a tunnel between a RAN network element and a first CN network element, a tunnel used for exposing RAN-provided information, and a tunnel not used for transmitting data between a terminal and a network.

17. A communication device, wherein the communication device is a second communication device, comprising:
a first obtaining module, configured to obtain fourth information, wherein the fourth information comprises at least one of the following: first information and a first QoS requirement; and
a second processing module, configured to perform a second operation based on the fourth information; wherein
the second operation comprises at least one of the following:
determining to establish a first tunnel or determining to establish a requested tunnel;
determining to establish a first subtunnel or determining to establish a subtunnel of a requested tunnel;
determining a QoS context of the first tunnel or determining a QoS context of a tunnel requested to be established;
based on a first QoS requirement, performing at least one of the following: establishing the first tunnel, mapping a first QoS parameter, allocating an identifier of the first tunnel, determining a first QoS rule, establishing the first subtunnel, and allocating an identifier of the first subtunnel;
determining a first CN network element, wherein the determining a first CN network element comprises at least one of the following: selecting the first CN network element based on a first DNN and/or a first slice, determining the first CN network element based on address information or index information of the first CN network element, querying the address information of the first CN network element based on the index information of the first CN network element, determining the first CN network element to be a CN network element connected to a first PDU session, and being a CN network element that sends the first information;
sending fifth information to the first CN network element, wherein the fifth information comprises at least one of the following: a second message, and second request information used for establishing a tunnel, establishing a subtunnel, establishing the first tunnel, and/or establishing the first subtunnel; and
sending third information to a third CN network element, a fifth CN network element, and/or a RAN network element, wherein the third information comprises at least one of the following: a third message, and third request information used for establishing a tunnel, establishing a subtunnel, establishing the first tunnel, and/or establishing the first subtunnel;
wherein the second message is one of the following: a second message for establishing a tunnel and/or allocating a tunnel resource, and a second message for requesting establishment of the first tunnel and/or the first subtunnel; and
the second request information for establishing a tunnel, establishing a subtunnel, establishing the first tunnel, and/or establishing the first subtunnel comprises at least one of the following: a first request, a first indication, a first QoS requirement, an identifier of the first tunnel or an identifier of the tunnel requested to be established, the first DNN, the first slice, RAN side information of the first tunnel or RAN side information of the tunnel requested to be established, the first QoS parameter, and the first QoS rule;
wherein the third message is one of the following: a third message for establishing a tunnel and/or allocating a tunnel resource, and a third message for requesting establishment of the first tunnel and/or the first subtunnel; and
the third request information for establishing a tunnel, establishing a subtunnel, establishing the first tunnel, and/or establishing the first subtunnel comprises at least one of the following: the first request, the first indication, the first QoS requirement, the identifier of the first tunnel or the identifier of the tunnel requested to be established, the first DNN, the first slice, CN side information of the first tunnel or CN side information of the established tunnel, exposure mode information of the RAN-provided information, the first QoS parameter, and the first QoS rule; wherein
the exposure mode information of the RAN-provided information comprises at least one of the following: description information of the RAN-provided information, and a exposure mode of the RAN-provided information;
the exposure mode of the RAN-provided information is used to indicate that the RAN-provided information is exposed through the established tunnel or the first tunnel;
the first QoS requirement comprises one of the following: a QoS requirement for the first data, a QoS requirement for the first tunnel, and a QoS requirement for the first subtunnel;
the first QoS rule comprises at least one of the following: a QoS rule for the first data, a QoS rule for the first tunnel, a QoS rule for the first subtunnel, a QoS rule for a tunnel requested to be established, and a QoS rule for a subtunnel requested to be established;
the first QoS parameter comprises at least one of the following: QoS information of the first data, a QoS parameter for the first tunnel, a QoS parameter for the first subtunnel, a QoS parameter for the tunnel requested to be established, and a QoS parameter for the subtunnel requested to be established;
the first data is data carrying the RAN-provided information; and
the first subtunnel is a tunnel in the first tunnel.

18. A communication device, wherein the communication device is a RAN network element, comprising:
a second obtaining module, configured to obtain sixth information, wherein the sixth information comprises at least one of the following: a first message, first request information used for establishing a tunnel or establishing a first tunnel, a third message, third request information for establishing a tunnel, establishing a subtunnel, establishing the first tunnel, and/or establishing a first subtunnel, exposure mode information of RAN-provided information, and address information or index information of a first CN network element; and
a third processing module, configured to perform a third operation based on the sixth information; wherein
the third operation comprises at least one of the following:
establishing the first tunnel or establishing a requested tunnel;
allocating RAN side information of the first tunnel;
sending RAN side information of the first tunnel;
performing at least one of the following for an established first tunnel or a requested tunnel established: not allocating a radio resource, and not mapping a radio tunnel;
performing at least one of the following for the established first subtunnel or a subtunnel of the requested tunnel established: not allocating a radio resource, and not mapping a radio tunnel;
sending, through the first tunnel or a tunnel requested to be established, the RAN-provided information;
sending, through the first subtunnel or a subtunnel of the tunnel requested to be established, the RAN-provided information;
selecting a tunnel according to a first QoS rule to send the RAN-provided information;
guaranteeing QoS of the first data or the first tunnel based on a first QoS parameter;
selecting a subtunnel according to the first QoS rule to send the RAN-provided information;
guaranteeing QoS of the first subtunnel based on the first QoS parameter; and
sending the RAN-provided information to the first CN network element;
wherein the first request information used for establishing a tunnel or establishing the first tunnel comprises at least one of the following: a first request, a first indication, a first quality of service QoS requirement, an identifier of the first tunnel or an identifier of the tunnel requested to be established, a first data network name DNN, a first slice, CN side information of the first tunnel or CN side information of the tunnel requested to be established, radio access network RAN side information of the first tunnel or RAN side information of the tunnel requested to be established, and address information or index information of the first CN network element;
the third request information for establishing a tunnel, establishing a subtunnel, establishing the first tunnel, and/or establishing the first subtunnel comprises at least one of the following: the first request, the first indication, the first QoS requirement, the identifier of the first tunnel or the identifier of the tunnel requested to be established, the first DNN, the first slice, the CN side information of the first tunnel or the CN side information of the established tunnel, exposure mode information of the RAN-provided information, the first QoS parameter, and the first QoS rule;
the exposure mode information is used to indicate that the RAN-provided information is exposed through the established tunnel or the first tunnel;
the exposure mode information of the RAN-provided information comprises at least one of the following: description information of the RAN-provided information, and a exposure mode of the RAN-provided information;
the exposure mode of the RAN-provided information is used to indicate that the RAN-provided information is exposed through the established tunnel or the first tunnel;
the first QoS requirement comprises one of the following: a QoS requirement for the first data, a QoS requirement for the first tunnel, and a QoS requirement for the first subtunnel;
the first QoS rule comprises at least one of the following: a QoS rule for the first data, a QoS rule for the first tunnel, a QoS rule for the first subtunnel, a QoS rule for the tunnel requested to be established, and a QoS rule for a subtunnel requested to be established;
the first QoS parameter comprises at least one of the following: QoS information of the first data, a QoS parameter for the first tunnel, a QoS parameter for the first subtunnel, a QoS parameter for the tunnel requested to be established, and a QoS parameter for the subtunnel requested to be established;
the first data is data carrying the RAN-provided information; and
the first subtunnel is a tunnel in the first tunnel.

19. A communication device, wherein the communication device is a fourth communication device, comprising:
a third obtaining module, configured to obtain fifth information, wherein the fifth information comprises at least one of the following: a second message, and second request information used for establishing a tunnel, establishing a subtunnel, establishing a first tunnel, and/or establishing a first subtunnel; and
a fifth processing module, configured to perform a fourth operation based on the fifth information; wherein
the fourth operation comprises at least one of the following:
establishing a requested tunnel or establishing the first tunnel;
obtaining, through the first tunnel or a tunnel requested to be established, RAN-provided information;
obtaining, from a RAN network element, the RAN-provided information;
assisting the RAN network element in exposing information provided by the RAN network element;
allocating CN side information of the tunnel requested to be established or the first tunnel; and
identifying, according to a first QoS rule, data received from a tunnel as the RAN-provided information; wherein
the second message is one of the following: a second message for establishing a tunnel and/or allocating a tunnel resource, and a second message for requesting establishment of the first tunnel and/or the first subtunnel; and
the second request information for establishing a tunnel, establishing a subtunnel, establishing the first tunnel, and/or establishing the first subtunnel comprises at least one of the following: a first request, a first indication, a first QoS requirement, an identifier of the first tunnel or an identifier of the tunnel requested to be established, a first DNN, a first slice, RAN side information of the first tunnel or RAN side information of the tunnel requested to be established, a first QoS parameter, and the first QoS rule.

20. A communication device, wherein the communication device is a fifth communication device, comprising:
a fourth obtaining module, configured to obtain seventh information, wherein the seventh information comprises at least one of the following: a subscription request for RAN-provided information, a measurement requirement for the RAN-provided information, the RAN network element supporting exposure of the RAN-provided information, a first CN network element supporting to assist the RAN network element in exposure of the RAN-provided information, a first message, and first request information for establishing a tunnel or establishing a first tunnel; and
a sixth processing module, configured to perform a fifth operation based on the seventh information; wherein
the fifth operation comprises at least one of the following:
determining a first QoS requirement; and
sending the first QoS requirement;
wherein the first QoS requirement comprises one of the following: a QoS requirement for first data, a QoS requirement for a first tunnel, and a QoS requirement for a first subtunnel; and
the first data is data carrying the RAN-provided information.

21. A communication device, comprising a processor and a memory, wherein the memory stores a program or instructions capable of running on the processor, wherein when the program is executed by the processor, the steps of the information exposure method according to any one of claims 1 to 7 are implemented; or the steps of the information exposure method according to any one of claims 8 to 10 are implemented; or the steps of the information exposure method according to any one of claims 11 to 13 are implemented; or the steps of the information exposure method according to claim 14 are implemented; or the steps of the information exposure method according to claim 15 are implemented.

22. A readable storage medium, wherein the readable storage medium stores a program, and when the program is executed by a processor, the steps of the information exposure method according to any one of claims 1 to 7 are implemented; or the steps of the information exposure method according to any one of claims 8 to 10 are implemented; or the steps of the information exposure method according to any one of claims 11 to 13 are implemented; or the steps of the information exposure method according to claim 14 are implemented; or the steps of the information exposure method according to claim 15 are implemented.
